# EUROPEAN PATENT SPECIFICATION

(11) **EP 4 502 668 B1**
(45) Date of publication and mention of the grant of the patent: **23.09.2026**
(21) Application number: 23811562.0
(22) Date of filing: 28.04.2023
(51) Int. Cl.: G02B 5/02, F21S 2/00, G02F 1/13357, F21Y 115/10, F21Y 115/30

(54) **LIGHT-DIFFUSING SHEET, BACKLIGHT UNIT, LIQUID CRYSTAL DISPLAY DEVICE, AND INFORMATION APPARATUS**
LICHTSTREUENDE FOLIE, RÜCKBELEUCHTUNGSEINHEIT, FLÜSSIGKRISTALLANZEIGEVORRICHTUNG UND INFORMATIONSVORRICHTUNG
FEUILLE DE DIFFUSION DE LUMIÈRE, UNITÉ DE RÉTROÉCLAIRAGE, DISPOSITIF D'AFFICHAGE À CRISTAUX LIQUIDES, APPAREIL D'INFORMATION

(30) Priority: 25.05.2022 JP 2022085568; 27.04.2023 JP 2023073458
(43) Date of publication of application: 05.02.2025
(73) Proprietor: KEIWA Incorporated, Tokyo 103-0025 (JP)
(72) Inventor: FURUTA, Akira, Tokyo 103-0025 (JP); HAYASHI, Nobuyuki, Tokyo 103-0025 (JP); SUKIGARA, Masayuki, Tokyo 103-0025 (JP); TAKAYAMA, Kazuya, Tokyo 103-0025 (JP); TSAI, Chengheng, Tokyo 103-0025 (JP)
(74) Representative: Lorenz Seidler Gossel Part. mbB
(86) International application number: PCT/JP2023/016901
(87) International publication number: WO 2023/228684

(56) References cited:
- WO-A1-2020/149209
- JP-A- 2004 295 080
- JP-A- 2004 295 080
- JP-A- 2005 241 919
- JP-A- 2005 241 919
- JP-A- 2010 039 091
- JP-A- 2010 039 091
- JP-A- 2011 022 565
- JP-A- 2011 022 565
- JP-A- 2012 043 671
- JP-A- 2012 043 671
- KR-A- 20170 112 530
- KR-A- 20170 112 530
- US-A1- 2007 171 671
- US-A1- 2009 262 428
- US-A1- 2020 341 335

## Description

### [Technical Field]

The present disclosure relates to a light-diffusing sheet, a backlight unit, a liquid crystal display device, and an information apparatus.

### [Background Art]

Liquid crystal display devices are widely used as display devices in various information apparatuses including smartphones and tablet terminals. As backlights of liquid crystal display devices, direct-type systems in which a light source is arranged on a rear surface of a liquid crystal panel are predominantly used.

When adopting a direct-type backlight, a light-diffusing sheet is used in order to erase an image of a light source such as an LED (Light Emitting Diode) and increase uniformity of in-plane brightness on a light-emitting surface (refer to PTL 1).

US 2007/171671 A1 discloses a light diffusion sheet comprising a light-transmitting resin sheet which contains a light diffusing agent and in which fine recesses having the shape of an inverted regular quadrangular pyramid have been formed such that the upper surface serves as a light emission side. Further prior art can be found in US 2009/262428 A1, US 2020/341335 A1, JP 2012 043671 A, JP 2010 039091 A, JP 2011 022565 A, JP 2005 241919 A, JP 2004 295080 A, and KR 2017 0112530 A.[Summary of Invention]

### [Technical Problem]

However, with conventional direct-type backlights, a drop in brightness may occur in a region between light sources (a region where a light source is not arranged) or the like due to thinning as a result of reductions in a thickness of a light-diffusing sheet and a distance between a light source and the light-diffusing sheet or a reduction in the number of light sources for the purpose of lowering cost.

By contrast, while attempts have been made to resolve brightness non-uniformity that occurs between a region directly above a light source and a region between light sources of a light-diffusing sheet by printing the region directly above a light source using white ink that reflects light to lower brightness of the region directly above a light source, in this case, a decline in brightness over an entire screen is inevitable.

An object of the present disclosure is to provide a light-diffusing sheet capable of improving brightness uniformity while avoiding a decline in brightness.

### [Solution to Problem]

In order to achieve the object described above, a light-diffusing sheet according to the present disclosure includes a plurality of depressed portions formed in an approximately inverted polygonal pyramid or an approximately inverted truncated polygonal pyramid on at least a first surface, an array pitch of the plurality of depressed portions is 300 µm or more and 1500 µm or less, a width of a boundary portion between adjacent depressed portions in the plurality of depressed portions is 25% of the array pitch or less, and ridgelines partitioning the plurality of depressed portions have a depressed shape between intersections of the ridgelines, with respect to a straight line connecting the intersections.

With the light-diffusing sheet according to the present disclosure, since the light-diffusing sheet includes a plurality of depressed portions formed in an approximately inverted polygonal pyramid or an approximately inverted truncated polygonal pyramid on at least a first surface, brightness uniformity can be improved. In addition, while the boundary portion between depressed portions is flatter than wall portions of the depressed portions and light from a light source is hardly diffused (reflected or refracted), setting a large array pitch of the depressed portions of 300 µm or more enables a ratio of an area occupied by the boundary portion on the first surface to be reduced. Accordingly, brightness uniformity can be improved without performing treatment that causes a decline in brightness with respect to the light-diffusing sheet.

In the light-diffusing sheet according to the present disclosure, in order to reduce an area ratio of the boundary portion, the width of the boundary portion is set to 25% or less, preferably 20% or less, and more preferably 15% or less of the array pitch of the depressed portions. However, in order to avoid a decline in abrasion resistance, the width of the boundary portion is set to 0.5% or more and preferably 1.0% or more of the array pitch of the depressed portions.

In the light-diffusing sheet according to the present disclosure, for example, since setting the array pitch of the depressed portions to more than 1500 µm results in a thickness of the light-diffusing sheet of 1 mm or more in a case of an inverted square pyramid with a vertex angle of 80 degrees and it is difficult to make a backlight unit thinner particularly when stacking the light-diffusing sheet in plurality, the array pitch of the depressed portions is set to 1500 µm or less.

In the present disclosure, "a boundary portion between depressed portions" means "a width of a flat portion intentionally arranged between the depressed portions" when the depressed portions are arrayed at intervals but means "a width of a curved portion of a vertex of a ridgeline that partitions the depressed portions" when the depressed portions are seamlessly arrayed.

In addition, in the present disclosure, while the expressions "approximately inverted polygonal pyramid" and "approximately inverted truncated polygonal pyramid" are used in consideration of the fact that it is difficult to form depressed portions of a geometrically-strict inverted polygonal pyramid and a geometrically-strict inverted truncated polygonal pyramid with ordinary shape transfer techniques, it is needless to say that the expressions include a true inverted polygonal pyramid, a true inverted truncated polygonal pyramid, and shapes that are substantially an inverted polygonal pyramid and an inverted truncated polygonal pyramid.

Furthermore, in the present disclosure, a "light-diffusing sheet" is to include a "light-diffusing plate" with a plate shape and a "light-diffusing film" with a film shape.

Moreover, in the present disclosure, an "optical sheet" means a sheet that has various optical functions such as diffusion, condensing, refraction, and reflection and a "light-diffusing sheet" is one of such "optical sheets".

In the light-diffusing sheet according to the present disclosure, when the array pitch is 1000 µm or less, an increase in thickness of the light-diffusing sheet can be suppressed and thinning of the backlight unit can be achieved.

In the light-diffusing sheet according to the present disclosure, when the width of the boundary portion is a width of a curved portion of a vertex of a ridgeline that partitions the depressed portions or, in other words, when the depressed portions are seamlessly arrayed, brightness uniformity can be improved as compared to the depressed portions being arrayed at intervals. In this case, the plurality of depressed portions may be formed in an approximately inverted square pyramid or an approximately inverted truncated square pyramid, the ridgeline may extend in a first direction and a second direction, the array pitch may be an average value of a first array pitch of the plurality of depressed portions in the first direction and a second array pitch of the plurality of depressed portions in the second direction, and a width of the boundary portion may be an average value of a width occupied by a curved portion of a vertex of the ridgeline in the first direction and a width occupied by a curved portion of a vertex of the ridgeline in the second direction. Accordingly, the depressed portions can be readily formed.

In the light-diffusing sheet according to the present disclosure, when an angle formed between a wall surface of the plurality of depressed portions and a sheet surface of the light-diffusing sheet is 40 degrees or more and 65 degrees or less, a sufficient effect of improving brightness uniformity can be produced by the depressed portions.

In the light-diffusing sheet according to the present disclosure, when the plurality of depressed portions are only provided on the first surface and a second surface of the light-diffusing sheet is a flat surface or a matte surface, an effect of improving brightness uniformity can be produced while suppressing abrasion and damage on the second surface.

A backlight unit according to the present disclosure is a backlight unit which is built into a liquid crystal display device and which guides light emitted by a light source toward a display screen and includes at least one light-diffusing sheet according to the present disclosure described earlier between the display screen and the light source.

Since the backlight unit according to the present disclosure includes the light-diffusing sheet according to the present disclosure described earlier, brightness uniformity can be improved while avoiding a decline in brightness over the entire screen. In particular, when the light-diffusing sheet according to the present disclosure described earlier is used in plurality, a superior effect of improving brightness uniformity can be produced while suppressing a decline in brightness.

In the backlight unit according to the present disclosure, preferably, the light-diffusing sheet is provided in plurality, and the first surface of the light-diffusing sheet which is farthest from the light source among the plurality of light-diffusing sheets is a light incident surface. Accordingly, brightness uniformity can be further improved as compared to a case where the first surface (depressed portion formation surface) of the light-diffusing sheet which is farthest from the light source is a light exit surface in the backlight unit provided with a plurality of light-diffusing sheets.

In the backlight unit according to the present disclosure, at least another light-diffusing sheet which does not have depressed portions formed in an approximately inverted polygonal pyramid or an approximately inverted truncated polygonal pyramid may be further provided between the display screen and the light source. Accordingly, both brightness and brightness uniformity can be improved by a combination of light-diffusing sheets of different types.

When the backlight unit according to the present disclosure includes the other light-diffusing sheet, the light-diffusing sheet may be provided in plurality, the other light-diffusing sheet may be arranged between the display screen and the plurality of light-diffusing sheets, and both surfaces of the other light-diffusing sheet may be a matte surface of which surface roughness Ra is 0.1 µm or more and 10 µm or less. Accordingly, both brightness and brightness uniformity can be further improved. In this case, more preferably, a difference in surface roughness Ra between both surfaces of the other light-diffusing sheet is 0.5 µm or more and the surface with smaller surface roughness Ra in the other light-diffusing sheet is a light incident surface. In addition, more preferably, the other light-diffusing sheet contains 0.5 parts by mass or more and 1.5 parts by mass or less of a light-diffusing agent per 100 parts by mass of a matrix resin.

When the backlight unit according to the present disclosure includes the other light-diffusing sheet, the other light-diffusing sheet may contain a light-diffusing agent and may be arranged so as to face a light exit surface of the light-diffusing sheet, and a brightness-improving sheet which is arranged so as to face the light exit surface of the other light-diffusing sheet may be further provided. Accordingly, both brightness and brightness uniformity can be further improved.

When the backlight unit according to the present disclosure includes the other light-diffusing sheet, the other light-diffusing sheet may be arranged closer to the display screen than the light-diffusing sheet. Accordingly, both brightness and brightness uniformity can be further improved. In this case, the light-diffusing sheet may be arranged so that the second surface faces the light source. Accordingly, both brightness and brightness uniformity can be even further improved.

A liquid crystal display device according to the present disclosure includes the backlight unit according to the present disclosure described earlier and a liquid crystal display panel.

Since the liquid crystal display device according to the present disclosure includes the backlight unit according to the present disclosure described earlier, brightness uniformity can be improved while avoiding a decline in brightness over the entire screen.

An information apparatus according to the present disclosure includes the liquid crystal display device according to the present disclosure described earlier.

Since the information apparatus according to the present disclosure includes the liquid crystal display device according to the present disclosure described earlier, brightness uniformity can be improved while avoiding a decline in brightness over the entire screen.

### [Advantageous Effects of Invention]

According to the present disclosure, a light-diffusing sheet capable of improving brightness uniformity while avoiding a decline in brightness can be provided.

### [Brief Description of Drawings]

[Fig. 1]

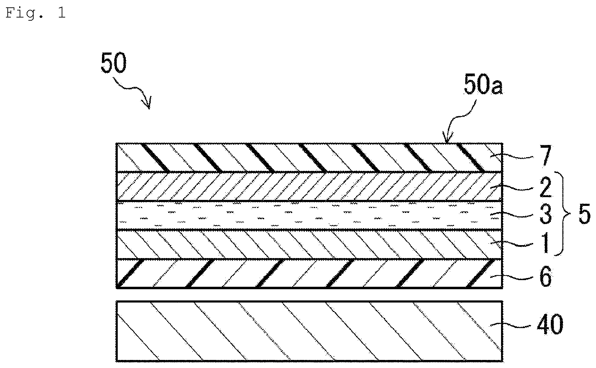

   Fig. 1 is a sectional view of a liquid crystal display device according to an embodiment.
[Fig. 2]

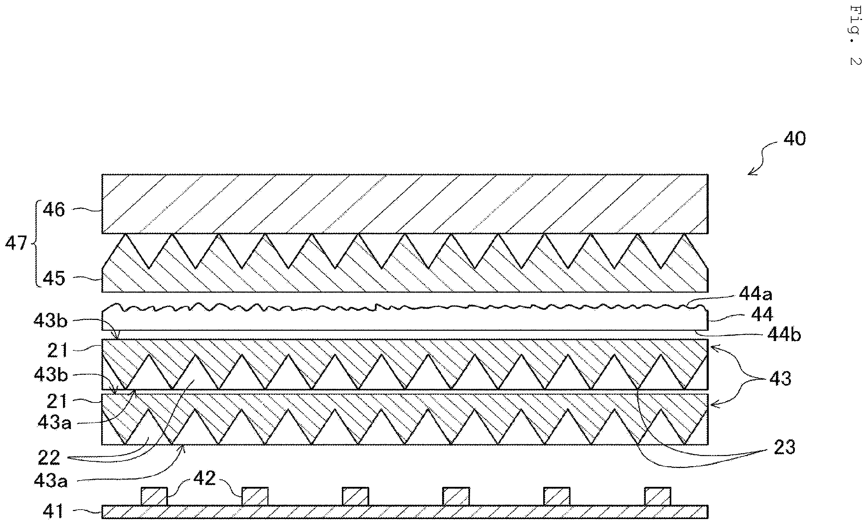

   Fig. 2 is a sectional view of an example of a backlight unit according to the embodiment.
[Fig. 3]

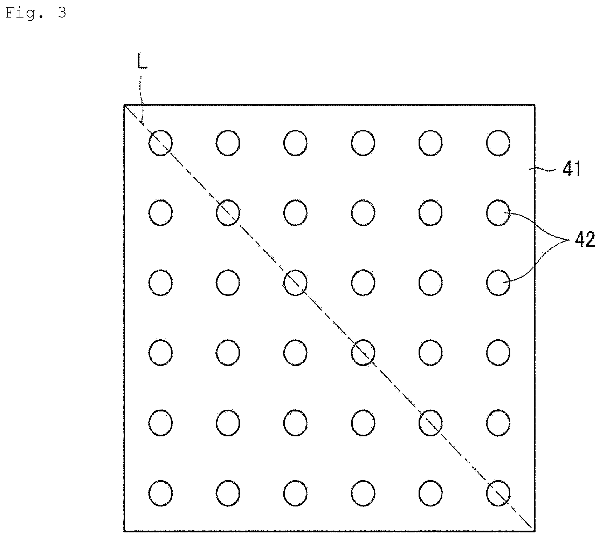

   Fig. 3 is a plan view showing an arrangement example of a light source in the backlight unit shown in Fig. 2.
[Fig. 4]

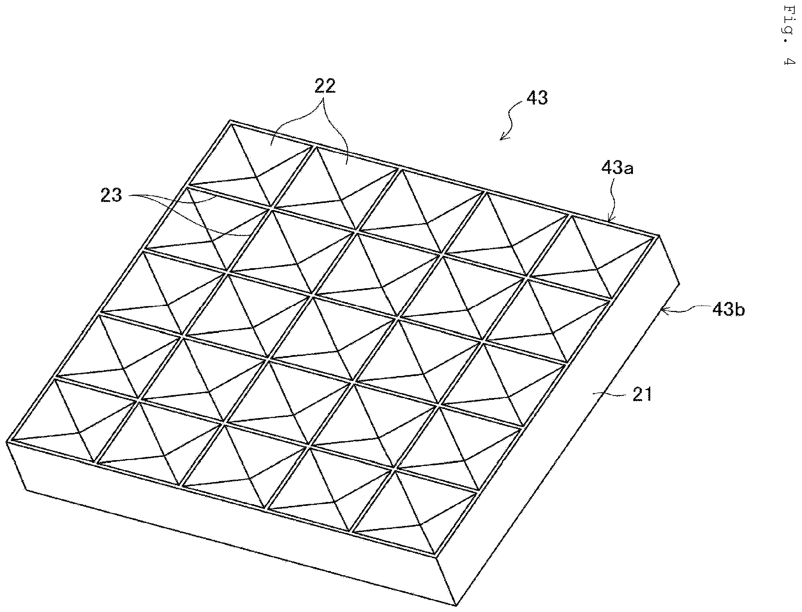

   Fig. 4 is a perspective view of a light-diffusing sheet according to the embodiment.
[Fig. 5]

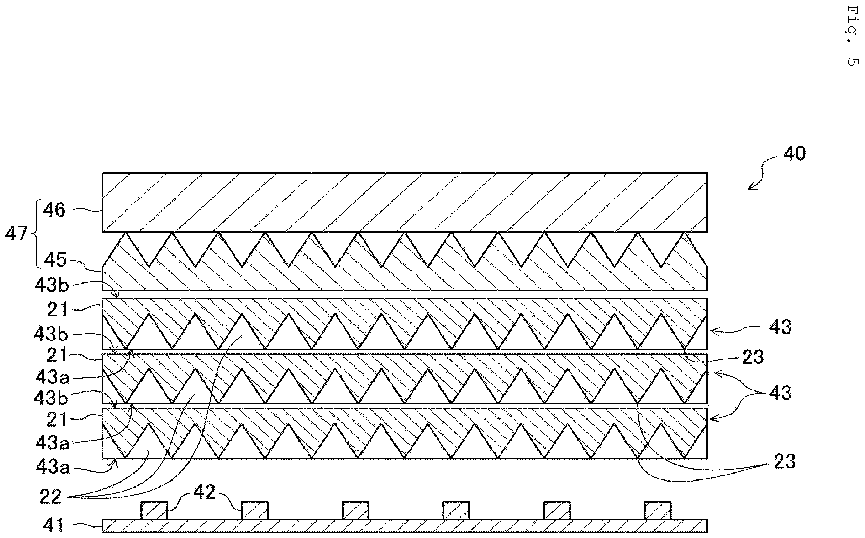

   Fig. 5 is a sectional view of another example of the backlight unit according to the embodiment.
[Fig. 6]

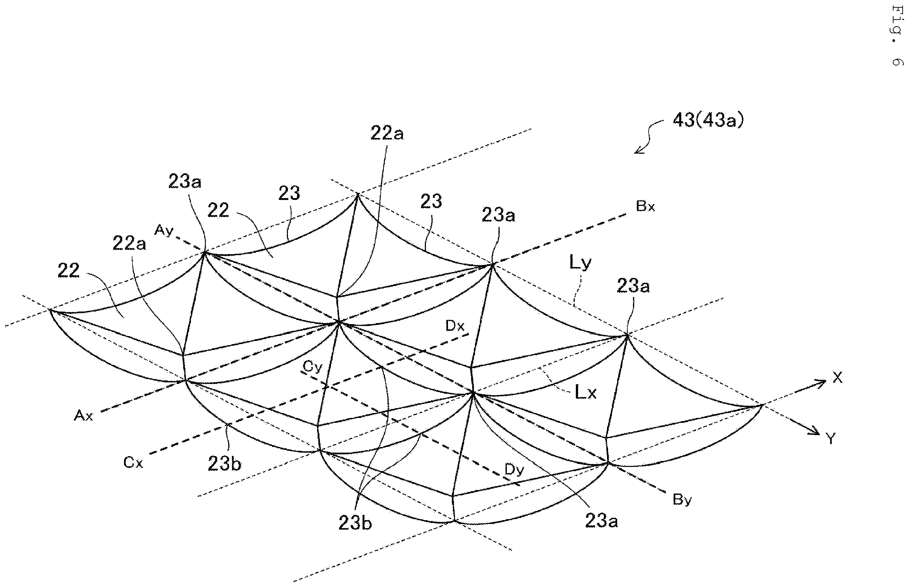

   Fig. 6 is a perspective view showing an enlargement of depressed portions formed on the light-diffusing sheet according to the embodiment.
[Fig. 7]

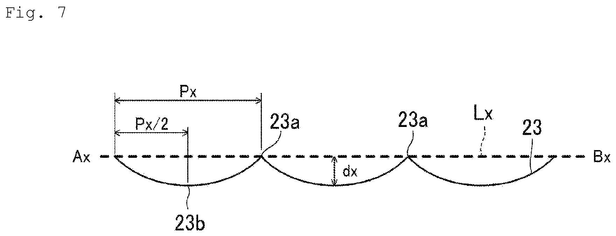

   Fig. 7 is a schematic view showing an example of a shape of an X-direction ridgeline which partitions depressed portions in the light-diffusing sheet according to the embodiment.
[Fig. 8]

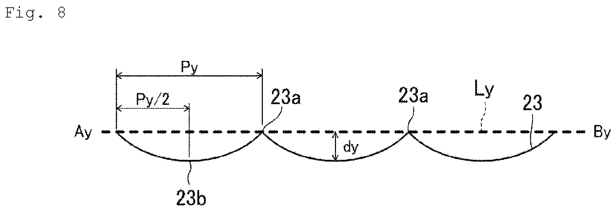

   Fig. 8 is a schematic view showing an example of a shape of a Y-direction ridgeline which partitions depressed portions in the light-diffusing sheet according to the embodiment.
[Fig. 9]

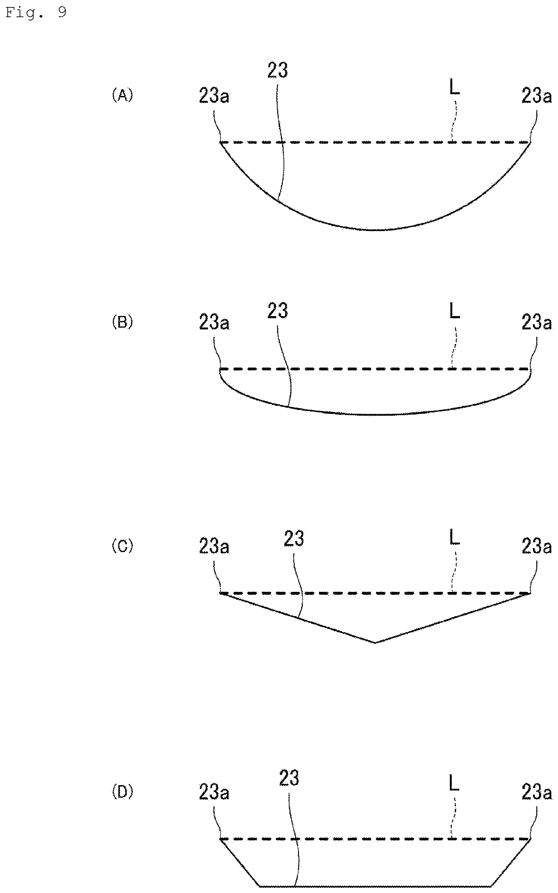

   Fig. 9 is a schematic view showing variations of the shape of ridgelines which partition depressed portions in the light-diffusing sheet according to the embodiment.
[Fig. 10]

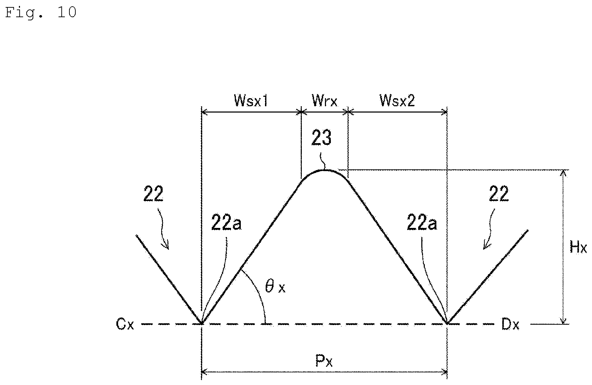

   Fig. 10 is a schematic view showing an example of a sectional structure in a case where the light-diffusing sheet according to the embodiment is cut along a plane which passes through respective centers of depressed portions adjacent to each other in the X-direction and an intermediate point of a ridgeline positioned between the depressed portions and which is perpendicular to a sheet surface.
[Fig. 11]

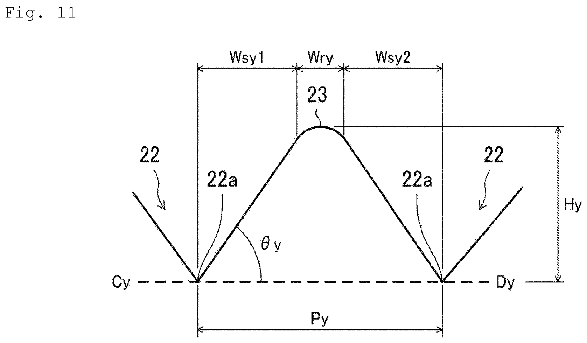

   Fig. 11 is a schematic view showing an example of a sectional structure in a case where the light-diffusing sheet according to the embodiment is cut along a plane which passes through respective centers of depressed portions adjacent to each other in the Y-direction and an intermediate point of a ridgeline positioned between the depressed portions and which is perpendicular to a sheet surface.
[Fig. 12]

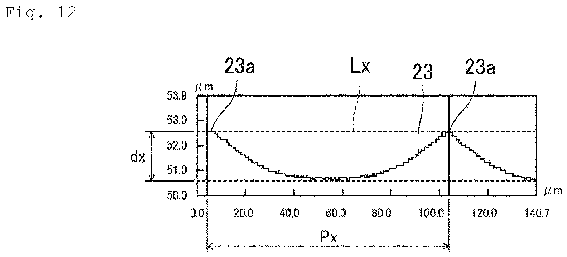

   Fig. 12 is a diagram showing an example of a result of a measurement of a shape and dimensions of the X-direction ridgeline shown in Fig. 7 by a laser microscope.
[Fig. 13]

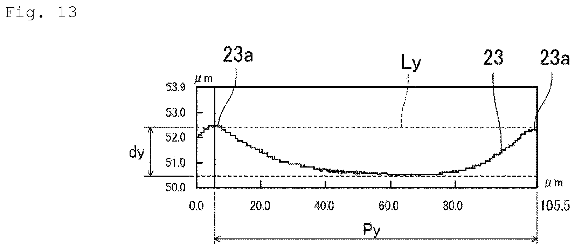

   Fig. 13 is a diagram showing an example of a result of a measurement of a shape and dimensions of the Y-direction ridgeline shown in Fig. 8 by a laser microscope.
[Fig. 14]

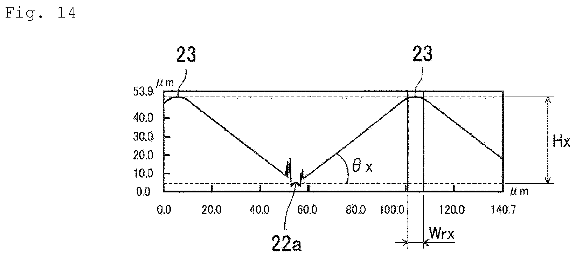

   Fig. 14 is a diagram showing an example of a result of a measurement of a shape and dimensions of the sectional structure shown in Fig. 10 by a laser microscope.
[Fig. 15]

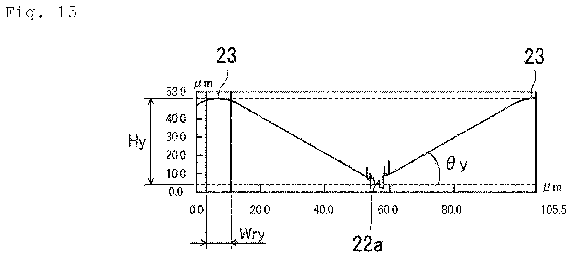

   Fig. 15 is a diagram showing an example of a result of a measurement of a shape and dimensions of the sectional structure shown in Fig. 11 by a laser microscope.
[Fig. 16]

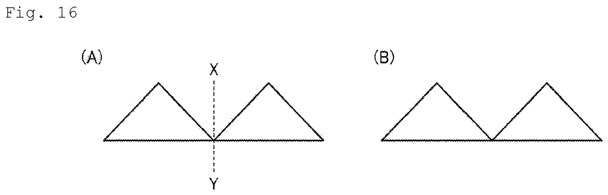

   Fig. 16 is a diagram showing a shape of a right square pyramid on a roll used to manufacture a light-diffusing sheet in an example.

### [Description of Embodiments]

### (Embodiment)

Hereinafter, an embodiment of the present disclosure will be described with reference to the drawings. It should be noted that the scope of the present disclosure is not limited to the embodiment described below and any modifications can be made without departing from the scope of technical ideas of the present disclosure.

### < Liquid Crystal Display Device >

As shown in Fig. 1, a liquid crystal display device 50 according to the present embodiment includes a liquid crystal display panel 5, a first polarizing plate 6 which is pasted to a bottom surface of the liquid crystal display panel 5, a second polarizing plate 7 which is pasted to a top surface of the liquid crystal display panel 5, and a backlight unit 40 which is provided via the first polarizing plate 6 on a rear surface side of the liquid crystal display panel 5. The liquid crystal display panel 5 includes a TFT substrate 1 and a CF substrate 2 which are provided so as to face each other, a liquid crystal layer 3 which is provided between the TFT substrate 1 and the CF substrate 2, and a seal material (not illustrated) which is provided in a frame shape between the TFT substrate 1 and the CF substrate 2 in order to seal the liquid crystal layer 3.

While a shape of a display screen 50a of the liquid crystal display device 50 as viewed from front (above in Fig. 1) is generally a rectangle or a square, the shape is not limited thereto and may be any shape such as a shape of a rectangle with rounded corners, a shape of an ellipse, a shape of a circle, a shape of a trapezoid, or a shape of an instrument panel of an automobile.

In the liquid crystal display device 50, in each subpixel corresponding to each pixel electrode, a voltage of a predetermined magnitude is applied to the liquid crystal layer 3 to change a state of alignment of the liquid crystal layer 3. Accordingly, transmittance of light incident via the first polarizing plate 6 from the backlight unit 40 is adjusted. The light of which transmittance is adjusted is emitted via the second polarizing plate 7 and an image is displayed.

The liquid crystal display device 50 according to the present embodiment is used as a display device to be built into various information apparatuses (for example, a vehicle-mounted device for car navigation or the like, portable information terminals such as a personal computer, a mobile phone, a notebook computer, and a tablet, a portable game machine, a copy machine, a ticket vending machine, and an automated teller machine).

For example, the TFT substrate 1 includes a plurality of TFTs provided in a matrix pattern on a glass substrate, an interlayer insulating film provided so as to cover each TFT, a plurality of pixel electrodes provided in a matrix pattern on the interlayer insulating film and respectively connected to the plurality of TFTs, and an alignment film provided so as to cover each pixel electrode. For example, the CF substrate 2 includes a black matrix provided in a grid pattern on a glass substrate, a color filter including a red layer, a green layer, and a blue layer respectively provided between the respective grids of the black matrix, a common electrode provided so as to cover the black matrix and the color filter, and an alignment film provided so as to cover the common electrode. The liquid crystal layer 3 is constituted of a nematic liquid crystal material or the like containing liquid crystal molecules with electro-optic characteristics. For example, the first polarizing plate 6 and the second polarizing plate 7 include a polarizer layer with a polarizing axis in one direction and a pair of protection layers provided so as to sandwich the polarizer layer.

### < Backlight Unit >

In an example shown in Fig. 2, the backlight unit 40 according to the present embodiment includes a reflecting sheet 41, a plurality of light sources 42 that are arranged in a two-dimensional shape on the reflecting sheet 41, a first light-diffusing sheet 43 provided above the plurality of light sources 42, a second light-diffusing sheet 44 provided above the first light-diffusing sheet 43, and a brightness-improving sheet 47 provided above the second light-diffusing sheet 44. While at least one first light-diffusing sheet 43 is used, in the present example, two first light-diffusing sheets 43 are used stacked on top of each other. While the brightness-improving sheet 47 is not particularly limited as long as brightness of light emitted from the light sources 42 can be increased, in the present example, a first prism sheet 45 constituting a lower layer and a second prism sheet 46 constituting an upper layer are used stacked as the brightness-improving sheet 47. Although not illustrated, a polarizing sheet may be provided above the brightness-improving sheet 47.

Note that in the present disclosure, a "light-diffusing sheet" is assumed to include a "light-diffusing plate" with a plate shape and a "light-diffusing film" with a film shape. In addition, an "optical sheet" means a sheet that has various optical functions such as diffusion, condensing, refraction, and reflection and an "optical sheet" is assumed to include a "light-diffusing sheet", a "reflecting sheet", and a "brightness-improving sheet".

### [Reflecting Sheet]

For example, the reflecting sheet 41 is constituted of a film made of white polyethylene terephthalate resin, a sliver-deposited film, or the like.

### [Light Sources]

While a type of the light sources 42 is not particularly limited, for example, the light sources 42 may be LED elements, laser elements, or the like and LED elements may be used from the perspectives of cost, productivity, and the like. A lens may be mounted to the LED elements to be used as the light sources 42 in order to adjust emission angle characteristics of the LED elements. The light sources 42 may have a rectangular shape in a plan view and, in such a case, a length of one side may be 10 µm or more (preferably, 50 µm or more) and 10 mm or less (preferably, 5 mm or less). While the number of arranged light sources 42 is also not particularly limited, when the plurality of light sources 42 are to be arranged in a distributed manner, the light sources 42 are preferably regularly arranged on the reflecting sheet 41. Regularly arranged means arranged with certain regularity and, for example, arranging the light sources 42 at equal intervals constitutes arranging regularly. When the light sources 42 are to be arranged at equal intervals, a center-to-center distance between two adjacent light sources 42 may be 0.5 mm or more (preferably, 2 mm or more) and 20 mm or less.

In the present embodiment, for example, the plurality of light sources 42 made of LED elements are arranged in a two-dimensional array shape at constant intervals as shown in Fig. 3. In other words, the plurality of light sources 42 are arrayed in two directions that are orthogonal to each other. White light sources may be used as the light sources 42. The white light sources may be constituted of an LED element with a peak wavelength in the blue region, an LED element with a peak wavelength in the green region, and an LED element with a peak wavelength in the red region and may emit light of which, for example, chromaticity coordinates in the CIE 1931 color space are 0.24 < x < 0.42 and 0.18 < y < 0.48. Alternatively, blue light sources may be used as the light sources 42. For example, the blue light sources may emit light of which chromaticity coordinates in the CIE 1931 color space are x < 0.24 and y < 0.18. When using blue light sources, a color-converting sheet is arranged between the light sources 42 and the brightness-improving sheet 47. The color-converting sheet is, for example, a wavelength-converting sheet that converts light from the light sources 42 being blue light sources into light of which a peak wavelength is a wavelength of any color (for example, green or red). For example, the color-converting sheet converts blue light with a wavelength of 450 nm into green light with a wavelength of 540 nm and red light with a wavelength of 650 nm. In this case, since using the light sources 42 that emit blue light with a wavelength of 450 nm results in the blue light being partially converted into green light and red light by the color-converting sheet, the light transmitted through the color-converting sheet is a white light. A QD (quantum dot) sheet, a fluorescent sheet, or the like may be used as the color-converting sheet.

### [First Light-diffusing Sheet]

The first light-diffusing sheet 43 includes a base material layer 21. A plurality of depressed portions 22 are provided on a first surface 43a (in the present example, a light incident surface) of the first light-diffusing sheet 43. The plurality of depressed portions 22 are formed in an approximately inverted polygonal pyramid or an approximately inverted truncated polygonal pyramid. In the present example, the plurality of depressed portions 22 are formed in an approximately inverted right square pyramid. Depressed portions 22 that are adjacent to each other are partitioned by ridgelines 23.

An array pitch of the depressed portions 22 is set to, for example, around 50 µm or more. As a feature of the present embodiment, in at least one first light-diffusing sheet 43, the array pitch of the depressed portions 22 is set to 300 µm or more and 1500 µm or less, preferably 300 µm or more and 1000 µm or less, more preferably 300 µm or more and 700 µm or less, and even more preferably 400 µm or more and 550 µm or less.

An angle formed between a wall surface of the depressed portions 22 (an inclined surface of the approximately inverted polygonal pyramid or the approximately inverted truncated polygonal pyramid) and a sheet surface (a virtual mirror surface without the depressed portions 22) of the first light-diffusing sheet 43 is set to, for example, 40 degrees or more and 65 degrees or less, preferably 45 degrees or more and 60 degrees or less, and more preferably 47 degrees or more and 55 degrees or less. In other words, a vertex angle of the depressed portions 22 is set to, for example, 50 degrees or more and 100 degrees or less, preferably 60 degrees or more and 90 degrees or less, and more preferably 70 degrees or more and 86 degrees or less.

While a second surface 43b of the first light-diffusing sheet 43 may be a flat surface (mirror surface), the second surface 43b may be a matte surface in order to improve diffusivity.

While the first light-diffusing sheet 43 is arranged so that the first surface 43a constitutes a light incident surface in the present example, alternatively, the first light-diffusing sheet 43 may be arranged so that the first surface 43a constitutes a light exit surface. In addition, when the first light-diffusing sheet 43 is used in plurality, there may be a mixture of the first light-diffusing sheet 43 of which the first surface 43a constitutes a light incident surface and the first light-diffusing sheet 43 of which the first surface 43a constitutes a light exit surface. Furthermore, when the first light-diffusing sheet 43 is used in plurality, a plurality of types of the first light-diffusing sheet 43 of which dimensions, shapes, or array pitches of the depressed portions 22 or a surface shape of the second surface 43b differ from each other may be used.

As shown in Fig. 4, a plurality of depressed portions 22 with an approximately inverted square pyramid shape (inverted pyramid shape) are arrayed in a two-dimensional matrix pattern on a first surface 21a of the first light-diffusing sheet 43. In other words, the plurality of depressed portions 22 are arrayed in two directions that are orthogonal to each other. Depressed portions 22 that are adjacent to each other are partitioned by ridgelines 23. The ridgelines 23 extend in the two directions in which the depressed portions 22 are arrayed. A center of each depressed portion 22 (a vertex of the inverted pyramid) is the deepest part of the depressed portion 22. While Fig. 4 illustrates a situation where the depressed portions 22 are arranged in a 5-by-5 matrix pattern for the sake of simplicity, the number of actually arrayed depressed portion 22 is significantly larger. In the two-dimensional array of the plurality of depressed portions 22, each depressed portion 22 may be seamlessly provided or provided at predetermined intervals on the first surface 21a. In addition, a part of the depressed portions 22 may be randomly arrayed to the extent that a light-diffusing effect is not impaired.

While the base material layer 21 is constructed using, for example, a polycarbonate as a base material (matrix resin) and preferably does not contain a diffusing agent, the base material layer 21 may contain up to, for example, around 10 percent by mass of a diffusing agent per 100 percent by mass of the base material. Known materials can be appropriately used as the diffusing agent. While the first light-diffusing sheet 43 has a one-layer structure of the base material layer 21 in the present example, alternatively, the first light-diffusing sheet 43 may have a structure of two layers or more including a layer on which the depressed portions 22 are formed.

Details of the first light-diffusing sheet 43 will be provided later.

### [Second Light-diffusing Sheet]

The second light-diffusing sheet 44 does not include depressed portions formed in an approximately inverted polygonal pyramid or an approximately inverted truncated polygonal pyramid. While a single second light-diffusing sheet 44 is used in the present example, two or more second light-diffusing sheets 44 may be used. For example, the second light-diffusing sheet 44 may include a matte surface on a first surface (a surface that opposes the first prism sheet 45) 44a and a flat surface (mirror surface) on a second surface 44b. The second light-diffusing sheet 44 is constructed using, for example, a polycarbonate as a base material (matrix resin) and preferably contains a diffusing agent and, for example, the second light-diffusing sheet 44 may contain around 0.5 to 4 parts by mass (preferably, around 0.5 to 1.5 parts by mass) of a diffusing agent per 100 parts by mass of the base material. The second light-diffusing sheet 44 is constructed by, for example, mixing 1 part by mass of a silicone composite powder (average particle size 2.0 µm) as a diffusing agent per 99 parts by mass of an aromatic polycarbonate resin.

### [Brightness-improving Sheet]

The first prism sheet 45 and the second prism sheet 46 that constitute the brightness-improving sheet 47 in the present example are, for example, films formed such that a plurality of groove lines with an isosceles triangular cross-section are adjacent to each other and a vertex angle of a prism sandwiched between a pair of adjacent groove lines is around 90 degrees. In this case, each groove line formed on the first prism sheet 45 and each groove line formed on the second prism sheet 46 are arranged so as to be orthogonal to each other. The first prism sheet 45 and the second prism sheet 46 may be integrally formed. For example, a PET (polyethylene terephthalate) film given prism shapes using a UV-curable acrylic resin may be used as the first prism sheet 45 and the second prism sheet 46.

### [Other Optical Sheets]

Although not illustrated, a polarizing sheet may be provided above the second prism sheet 46. The polarizing sheet improves brightness of the display screen 50a by preventing light emitted from the backlight unit 40 from being absorbed by the first polarizing plate 6 of the liquid crystal display device 50.

### < Modification of Backlight Unit >

A combination of a stack of two first light-diffusing sheets 43 and the second light-diffusing sheet 44 is used in the configuration example of the backlight unit 40 shown in Fig. 2. Alternatively, as in the modification shown in Fig. 5, a stack of three first light-diffusing sheets 43 may be used without using the second light-diffusing sheet 44. Alternatively, although not illustrated, four or more first light-diffusing sheets 43 may be stacked. In the present modification, in at least one first light-diffusing sheet 43, the array pitch of the depressed portions 22 is similarly set to 300 µm or more and 1500 µm or less, preferably 300 µm or more and 1000 µm or less, more preferably 300 µm or more and 700 µm or less, and even more preferably 400 µm or more and 550 µm or less.

While the first light-diffusing sheet 43 is arranged so that the first surface 43a constitutes a light incident surface in the present modification, alternatively, the first light-diffusing sheet 43 may be arranged so that the first surface 43a constitutes a light exit surface. In addition, there may be a mixture of the first light-diffusing sheet 43 of which the first surface 43a constitutes a light incident surface and the first light-diffusing sheet 43 of which the first surface 43a constitutes a light exit surface.

### < Details of First Light-diffusing Sheet >

While the plurality of depressed portions 22 are formed on the first surface 43a of the first light-diffusing sheet 43 in the example shown in Fig. 2 or Fig. 5, in addition thereto, other depressed portions similar to the depressed portions 22 may also be formed in plurality on the second surface 43b of the first light-diffusing sheet 43.

The plurality of depressed portions 22 may be formed in an approximately inverted polygonal pyramid or an approximately inverted truncated polygonal pyramid. The plurality of depressed portions 22 may be regularly two-dimensionally arrayed. As an "inverted polygonal pyramid (truncated polygonal pyramid)", a triangular pyramid (truncated triangular pyramid), a square pyramid (truncated square pyramid), or a hexagonal pyramid (truncated hexagonal pyramid) that can be two-dimensionally arranged in a seamless manner is preferable. While a die (metal roll) is used in manufacturing steps such as extrusion molding and injection molding when providing the depressed portions 22, an inverted square pyramid (truncated square pyramid) may be selected as the "inverted polygonal pyramid (truncated polygonal pyramid)" in consideration of accuracy of cutting operations of a surface of the die (metal roll).

In the present disclosure, while the expressions "approximately inverted polygonal pyramid" and "approximately inverted truncated polygonal pyramid" are used in consideration of the fact that it is difficult to form depressed portions of a geometrically-strict inverted polygonal pyramid and a geometrically-strict inverted truncated polygonal pyramid with ordinary shape transfer techniques, it is needless to say that the expressions include a true inverted polygonal pyramid, a true inverted truncated polygonal pyramid, and shapes that are substantially an inverted polygonal pyramid and an inverted truncated polygonal pyramid. In addition, "approximately" means "can be approximated" and, for example, an "approximate square pyramid" refers to a shape that can be approximated to a square pyramid. Furthermore, shapes having deformed from an "inverted polygonal pyramid" or an "inverted truncated polygonal pyramid" within a range of inevitable variability of shapes attributable to machining accuracy in industrial production are also included in an "approximately inverted polygonal pyramid" or an "approximately inverted truncated polygonal pyramid".

When a plurality of depressed portions 22 are regularly two-dimensionally arrayed, the plurality of depressed portions 22 may be seamlessly provided over an entire surface of the first light-diffusing sheet 43 or a flat portion with a predetermined width may be provided between the depressed portions 22.

The first light-diffusing sheet 43 may be constituted of the base material layer 21 not including a diffusing agent such as the base material layer 21 made of a clear polycarbonate. When the base material layer 21 is to contain a diffusing agent, while a material of the diffusing agent is not particularly limited, inorganic particles of silica, titanium oxide, aluminum hydroxide, barium sulfate, or the like or organic particles of acrylic, acrylonitrile, silicone, polystyrene, polyamide, or the like may be used. A particle size of the diffusing agent may be set to, for example, 0.1 µm or more (preferably, 1 µm or more) and 10 µm or less (preferably, 8 µm or less) from the perspective of a light-diffusing effect. While the first light-diffusing sheet 43 preferably does not include a diffusing agent from the perspectives of an effect of reflection and refraction by the approximately inverted polygonal pyramid shape and a light-diffusing effect by the diffusing agent, a content of the diffusing agent may be set to, for example, 0.1 percent by mass or more (preferably, 0.3 percent by mass or more) and 10 percent by mass or less (preferably, 8 percent by mass or less) with a material (matrix) constituting the base material layer 21 being 100 percent by mass. A difference between a refractive index of the diffusing agent and a refractive index of the matrix of the base material layer 21 may be set to 0.01 or more, preferably 0.03 or more, more preferably 0.05 or more, even more preferably 0.1 or more, and most preferably 0.15 or more. The diffusing effect by the diffusing agent becomes insufficient when the difference between the refractive index of the diffusing agent and the refractive index of the matrix of the base material layer 21 is less than 0.01.

While a resin that constitutes the matrix of the base material layer 21 is not particularly limited as long as a material that transmits light is used, for example, acrylic, polystyrene, styrene-acrylic, polycarbonate, MS (methyl methacrylate-styrene copolymer) resin, polyethylene terephthalate, polyethylene naphthalate, cellulole acetate, or polyimide may be used.

While a thickness of the first light-diffusing sheet 43 is not particularly limited, for example, the thickness may be 3 mm or less (preferably 2 mm or less, more preferably 1.5 mm or less, even more preferably 1 mm or less) and 0.1 mm or more (preferably 0.2 mm or more and more preferably 0.3 mm or more). Achieving a thinner liquid crystal display becomes difficult when the thickness of the first light-diffusing sheet 43 exceeds 3 mm. On the other hand, producing an effect of improving brightness uniformity becomes difficult when the thickness of the first light-diffusing sheet 43 falls below 0.1 mm.

When the first light-diffusing sheet 43 has a multilayer structure (for example, a base material layer constituting a first layer and a depressed portion formation layer constituting a second layer), a thickness of the depressed portion formation layer is greater than a maximum depth of the depressed portions 22. For example, in a case of a layer provided with depressed portions with a depth of 20 µm, the thickness of the layer is set greater than 20 µm. The first light-diffusing sheet 43 may be configured to have a structure of three layers or more including the base material layer and the depressed portion formation layer. Alternatively, the base material layer and the depressed portion formation layer may be respectively configured as independent sheets and the sheets may either be stacked or separately arranged.

### < Method of Manufacturing First Light-diffusing Sheet >

Hereinafter, a method of manufacturing the first light-diffusing sheet 43 will be described. While the method of manufacturing the first light-diffusing sheet 43 is not particularly limited, for example, an extrusion molding method, a compression molding method, a transfer method using a UV-curable resin or a thermosetting resin, or an injection molding method may be used. When extruding the first light-diffusing sheet 43, for example, a line rate may be set to preferably 2 m/minute or more and 20 m/minute or less (more preferably 3 m/minute or more and 10 m/minute or less) and compressible linear pressure may be set to preferably 100 kgf/cm or more and 800 kgf/cm or less (more preferably 200 kgf/cm or more and 500 kgf/cm or less). A line rate of more than 50 m/minute readily lowers a shape transfer rate while a line rate of less than 1 m/minute readily lowers productivity. In addition, compressible linear pressure of more than 1000 kgf/cm may sometimes exceed a mechanical strength of manufacturing equipment while compressible linear pressure of less than 50 kgf/cm readily lowers a shape transfer rate.

Procedures of manufacturing a single-layer light-diffusing sheet with uneven shapes on a surface thereof using an extrusion molding method are as follows. First, plastic particles (a diffusing agent may be added thereto) with a pellet shape are fed into a single-screw extruder and melted and kneaded while applying heat. Subsequently, after sandwiching molten resin extruded by T-dies with two metal rolls and cooling the molten resin, a light-diffusing sheet is fabricated by conveying the resin using a guide roll and cutting the resin into flat sheets with a sheet cutter. In this case, since sandwiching the molten resin using metal rolls of which surfaces have an inverted shape of a desired uneven shape causes the inverted shape on the roll surfaces to be transferred to the resin, the desired uneven shape can be formed on the surface of the light-diffusing sheet. In addition, since the shape transferred to the resin does not necessarily represent a 100% transfer of the shape of the roll surfaces, the shape of the roll surfaces may be designed backward from a degree of transfer.

When manufacturing a light-diffusing sheet with a two-layer structure having an uneven shape on a surface thereof using an extrusion molding method, for example, after feeding plastic particles with a pellet shape necessary for forming each layer into each of two single-screw extruders, procedures similar to those described earlier may be executed for each layer and the respective fabricated sheets may be stacked.

Alternatively, a light-diffusing sheet with a two-layer structure having an uneven shape on a surface thereof may be fabricated as described below. For example, plastic particles with a pellet shape necessary for forming each layer are fed into each of two single-screw extruders and melted and kneaded while applying heat. Subsequently, molten resin to become each layer is fed into one T-die and stacked molten resin having been stacked in the T-die and extruded from the T-die is sandwiched between two metal rolls and cooled. Subsequently, a light-diffusing sheet with a two-layer structure having an uneven shape on a surface thereof may be fabricated by conveying the stacked molten resin using a guide roll and cutting the resin into flat sheets with a sheet cutter.

In addition, a light-diffusing sheet may be manufactured as described below by shape transfer using UV (ultraviolet light). First, a roll having an inverted shape of an uneven shape to be transferred is filled with an uncured ultraviolet-curing resin and a base material is pressed against the resin. Next, ultraviolet light is radiated to cure the ultraviolet-curing resin in a state where the roll filled with the resin and the base material are integrated. Next, a sheet to which the uneven shape has been shape-transferred by the resin is separated from the roll. Finally, the sheet is once again irradiated with ultraviolet light to completely cure the resin and a light-diffusing sheet with an uneven shape on a surface thereof is fabricated.

### < Features of First Light-diffusing Sheet >

Hereinafter, features of the first light-diffusing sheet 43 according to the present embodiment will be described in detail with reference to Figs. 6 to 11.

As shown in Fig. 6, the plurality of depressed portions 22 formed in, for example, an approximately inverted right square pyramid are provided on the first surface 43a of the first light-diffusing sheet 43. The plurality of depressed portions 22 may be formed in an approximately inverted truncated right square pyramid. A center 22a of each depressed portion 22 is the deepest part of the depressed portion 22. The plurality of depressed portions 22 are arrayed in an X-direction (first direction) and a Y-direction (second direction) that are orthogonal to each other. Depressed portions 22 that are adjacent to each other are partitioned by ridgelines 23. The ridgelines 23 extend in the X-direction and the Y-direction.

In the first light-diffusing sheet 43, with respect to straight lines Lx and Ly connecting intersections 23a of the ridgelines 23, the ridgelines 23 have a depressed shape between the intersections 23a. A maximum height difference d between the straight lines Lx and Ly that connect the intersections 23a and the ridgelines 23 may be 1 µm or more and 10 µm or less, preferably 1.5 µm or more and 7 µm or less, and more preferably 2.5 µm or more and 5 µm or less.

Note that in the first light-diffusing sheet 43, the ridgelines may have a depressed shape between all of the intersections 23a of the ridgelines or the ridgelines 23 may not have a depressed shape between a part of the intersections 23a.

Fig. 7 shows an example of a shape of the ridgeline 23 extending in the X-direction along a line Ax-Bx shown in Fig. 6 as viewed from a direction parallel to the sheet surface and perpendicular to the X-direction, and Fig. 8 shows an example of a shape of the ridgeline 23 extending in the Y-direction along a line Ay-By shown in Fig. 6 as viewed from a direction parallel to the sheet surface and perpendicular to the Y-direction. As shown in Fig. 7, with respect to the straight line Lx that connects the intersections 23a of the ridgelines 23 in the X-direction, the ridgelines 23 may have a depressed shape between the intersections 23a. In this case, when an array pitch in the X-direction of the depressed portions 22 is denoted by Px, for example, the ridgelines 23 extending in the X-direction have a lowest point 23b at a position of Px/2 (half a pitch) from the intersections 23a and a distance (maximum height difference) from the straight line Lx to the lowest point 23b is dx. In addition, as shown in Fig. 8, with respect to the straight line Ly that connects the intersections 23a of the ridgelines 23 in the Y-direction, the ridgelines 23 may have a depressed shape between the intersections 23a. In this case, when an array pitch in the Y-direction of the depressed portions 22 is denoted by Py, for example, the ridgelines 23 extending in the Y-direction have the lowest point 23b at a position of Py/2 (half a pitch) from the intersections 23a and a distance (maximum height difference) from the straight line Ly to the lowest point 23b is dy.

When the depressed portions 22 are formed in an inverted right square pyramid, the array pitch Px of the depressed portions 22 in the X-direction is equal to intervals (horizontal distances) between the intersections 23a in the X-direction and the array pitch Py of the depressed portions 22 in the Y-direction is equal to intervals (horizontal distances) between the intersections 23a in the Y-direction.

When a maximum height difference d represents an average value of the maximum height difference dx in the X-direction and the maximum height difference dy in the Y-direction, the maximum height difference d may be set to 1 µm or more and 10 µm or less, preferably 1.5 µm or more and 7 µm or less, and more preferably 2.5 µm or more and 5 µm or less.

While a depressed shape of the ridgelines 23 between the intersections 23a is not particularly limited, for example, as shown in Fig. 9, the ridgelines 23 may be depressed between the intersections 23a in an approximately arc shape ((A) in Fig. 9), an approximately parabolic shape ((B) in Fig. 9), an approximately triangular shape ((C) in Fig. 9), or an approximately trapezoidal shape ((D) in Fig. 9) with respect to the straight line L that connects the intersections 23a.

As a feature of the first light-diffusing sheet 43, when the array pitch of the depressed portions 22 is denoted by P and a dimension occupied by a curved portion at a vertex of the ridgelines 23 in the array direction of the depressed portions 22 is denoted by Wr, a ratio Wr/P shall be 0.25 (25%) or lower, preferably 0.2 (20%) or lower, and more preferably 0.15 (15%) or lower. However, in order to avoid a decline in abrasion resistance, the ratio Wr/P is set to 0.005 (0.5%) or higher and preferably 0.01 (1.0%) or higher.

When the depressed portions 22 are seamlessly arrayed as shown in Fig. 6 in the present disclosure, the "curved portion at a vertex of the ridgelines 23" is assumed to be a "boundary portion between the depressed portions 22". In addition, when the depressed portions 22 are arrayed at intervals, a "flat portion intentionally arranged between the depressed portions 22" is assumed to be the "boundary portion between the depressed portions 22".

Fig. 10 shows an example of a sectional structure of the first light-diffusing sheet 43 along a line Cx-Dx in Fig. 6 and Fig. 11 shows an example of a sectional structure of the first light-diffusing sheet 43 along a line Cy-Dy in Fig. **6****.** Specifically, Fig. 10 shows a sectional structure in a case where the first light-diffusing sheet 43 is cut along a plane which passes through respective centers 22a of the depressed portions 22 adjacent to each other in the X-direction and an intermediate point between the intersections 23a of the ridgelines 23 positioned between the depressed portions 22 and which is perpendicular to the sheet surface. Fig. 11 shows a sectional structure in a case where the first light-diffusing sheet 43 is cut along a plane which passes through respective centers 22a of the depressed portions 22 adjacent to each other in the Y-direction and an intermediate point between the intersections 23a of the ridgelines 23 positioned between the depressed portions 22 and which is perpendicular to the sheet surface.

In the sectional structure shown in Fig. 10, an interval (horizontal distance) between respective centers 22a of the depressed portions 22 adjacent to each other in the X-direction is equal to the array pitch Px of the depressed portions 22 in the X-direction. A dimension occupied by the curved portion of the vertex of the ridgelines 23 (boundary portion) in the X-direction is denoted by Wrx. Dimensions occupied in the X-direction by straight portions of respective wall surfaces of the depressed portions 22 (inclined surfaces of inverted square pyramids) adjacent to each other across the ridgelines 23 are denoted by Wsx1 and Wsx2. An angle formed between the wall surface of the depressed portions 22 (inclined surfaces of inverted square pyramids) in the X-direction and the sheet surface is denoted by θx. A height from the center 22a of each depressed portion 22 to the vertex (an intermediate point between the intersections 23a) of each ridgeline 23 (ridgeline 23 extending in the Y-direction) is denoted by Hx.

In the sectional structure shown in Fig. 11, an interval (horizontal distance) between respective centers 22a of the depressed portions 22 adjacent to each other in the Y-direction is equal to the array pitch Py of the depressed portions 22 in the Y-direction. A dimension occupied by the curved portion of the vertex of the ridgelines 23 (boundary portion) in the Y-direction is denoted by Wry. Dimensions occupied in the Y-direction by straight portions of respective wall surfaces of the depressed portions 22 (inclined surfaces of inverted square pyramids) adjacent to each other across the ridgelines 23 are denoted by Wsy1 and Wsy2. An angle formed between the wall surface of the depressed portions 22 (inclined surfaces of inverted square pyramids) in the Y-direction and the sheet surface is denoted by θy. A height from the center 22a of each depressed portion 22 to the vertex (an intermediate point between the intersections 23a) of each ridgeline 23 (ridgeline 23 extending in the X-direction) is denoted by Hy.

When the depressed portions 22 are formed in an inverted square pyramid, and an average value of the array pitch Px and the array pitch Py is denoted by P and an average value of the dimension Wrx and the dimension Wry is denoted by Wr, a ratio Wr/P shall be set to 0.25 (25%) or lower, preferably 0.2 (20%) or lower, and more preferably 0.15 (15%) or lower.

Fig. 12 shows an example of a result of a measurement by a laser microscope of a shape and a dimension of the X-direction ridgeline shown in Fig. 7, Fig. 13 shows an example of a result of a measurement by a laser microscope of a shape and a dimension of the Y-direction ridgeline shown in Fig. 8, Fig. 14 shows an example of a result of a measurement by a laser microscope of a shape, a dimension, and an angle of the sectional structure shown in Fig. 10, and Fig. 15 shows an example of a result of a measurement by a laser microscope of a shape, a dimension, and an angle of the sectional structure shown in Fig. 11. In a measurement of maximum values (maximum height differences) dx and dy of distances between the straight lines Lx and Ly connecting the intersections 23a of the ridgeline 23 and the ridgeline 23, maximum values of lengths of perpendiculars drawn at a right angle from a point on the ridgeline 23 to the straight lines Lx and Ly are denoted by dx and dy. In addition, in a measurement of the array pitches Px and Py, a "horizontal distance between the intersections 23a" in each of the X-direction and the Y-direction is obtained as Px and Py. In this manner, the array pitches Px and Py can be readily and accurately obtained even in the method of measuring a "horizontal distance between the intersections 23a".

### < Advantageous Effects of Embodiment (Including Modifications) >

As described above, the first light-diffusing sheet 43 according to the present embodiment includes the plurality of depressed portions 22 formed in an approximately inverted polygonal pyramid or an approximately inverted truncated polygonal pyramid on at least the first surface 43a, an array pitch of the plurality of depressed portions 22 is 300 µm or more and 1500 µm or less, and a width of a boundary portion between adjacent depressed portions 22 is 25% of the array pitch or less.

With the first light-diffusing sheet 43 according to the present embodiment, since the first light-diffusing sheet 43 includes the plurality of depressed portions 22 formed in an approximately inverted polygonal pyramid or an approximately inverted truncated polygonal pyramid on at least the first surface 43a, brightness uniformity can be improved. In addition, while the boundary portion between the depressed portions 22 is flatter than wall portions of the depressed portions 22 and light from the light source 42 is hardly diffused (reflected or refracted), setting a large array pitch of the depressed portions 22 of 300 µm or more enables a ratio of an area occupied by the boundary portion on the first surface 43a to be reduced. Accordingly, brightness uniformity can be improved without performing treatment that causes a decline in brightness with respect to the first light-diffusing sheet 43.

In the first light-diffusing sheet 43 according to the present embodiment, in order to reduce an area ratio of the boundary portion, the width of the boundary portion is set to 25% or less, preferably 20% or less, and more preferably 15% or less of the array pitch of the depressed portions 22. However, in order to avoid a decline in abrasion resistance, the width of the boundary portion is set to 0.5% or more and preferably 1.0% or more of the array pitch of the depressed portions 22.

In the first light-diffusing sheet 43 according to the present embodiment, for example, since setting the array pitch of the depressed portions 22 to more than 1500 µm results in a sheet thickness of 1 mm or more in a case of an inverted square pyramid with a vertex angle of 80 degrees and it is difficult to make the backlight unit 40 thinner particularly when stacking the first light-diffusing sheet 43 in plurality, the array pitch of the depressed portions 22 is set to 1500 µm or less.

In the first light-diffusing sheet 43 according to the present embodiment, when the array pitch of the depressed portions 22 is 1000 µm or less, an increase in sheet thickness can be suppressed and thinning of the backlight unit 40 can be achieved.

In the first light-diffusing sheet 43 according to the present embodiment, the width of the boundary portion between the depressed portions 22 may be a width of a curved portion of a vertex of the ridgelines 23 that partition the depressed portions **22.** In this case, since the depressed portions 22 are seamlessly arrayed, brightness uniformity can be improved as compared to the depressed portions 22 being arrayed at intervals. In addition, when the depressed portions 22 are formed in an approximately inverted square pyramid or an approximately inverted truncated square pyramid, the depressed portions 22 can be readily formed.

In the first light-diffusing sheet 43 according to the present embodiment, when the angle formed between the wall surface of the depressed portions 22 and the sheet surface is 40 degrees or more and 65 degrees or less, a sufficient effect of improving brightness uniformity can be produced by the depressed portions 22.

In the first light-diffusing sheet 43 according to the present embodiment, when the depressed portions 22 are only provided on the first surface 43a and the second surface 43b is a flat surface or a matte surface, an effect of improving brightness uniformity can be produced while suppressing abrasion and damage on the second surface 43b.

While the ridgelines 23 (opening edges of the depressed portions 22) that partition the depressed portions 22 cause abrasion and damage in the first light-diffusing sheet 43 according to the present embodiment, when the ridgelines 23 have a depressed shape between the intersections 23a of the ridgelines 23, abrasion and damage are less likely to occur even when the first light-diffusing sheet 43 is used by being stacked with other optical sheets or other light-diffusing sheets. In addition, the dimension Wr occupied by the curved portion of a vertex of the ridgelines 23 in the array direction of the depressed portions 22 is kept to or under 25% of the array pitch P of the depressed portions. Therefore, since the vertex of the ridgelines 23 can maintain a steep shape, brightness uniformity does not readily decline even when the ridgelines 23 are depressed between the intersections 23a. Furthermore, setting the maximum height difference d between a straight line connecting the intersections 23a and the ridgelines 23 to 1 µm or more improves scratch resistance while setting the maximum height difference d to 10 µm or less enables a decline in brightness uniformity to be suppressed. In particular, when the maximum height difference d is 1.5 µm or more and 7 µm or less, both scratch resistance and brightness uniformity can be further improved, and when the maximum height difference d is 2.5 µm or more and 5 µm or less, both scratch resistance and brightness uniformity can be even further improved.

The backlight unit 40 according to the present embodiment is the backlight unit 40 which is built into the liquid crystal display device 50 and which guides light emitted by the light source 42 toward the display screen 50a and includes at least one first light-diffusing sheet 43 according to the present embodiment between the display screen 50a and the light source 42.

Since the backlight unit 40 according to the present embodiment includes the first light-diffusing sheet 43, brightness uniformity can be improved while avoiding a decline in brightness over the entire screen. In particular, when the first light-diffusing sheet 43 is used in plurality, a superior effect of improving brightness uniformity can be produced while suppressing a decline in brightness.

In the backlight unit 40 according to the present embodiment, the first light-diffusing sheet 43 may be provided in plurality and the first surface 43a of the first light-diffusing sheet 43 which is farthest from the light source 42 among the plurality of first light-diffusing sheets 43 may be a light incident surface. Accordingly, brightness uniformity can be further improved as compared to a case where the first surface 43a (a formation surface of the depressed portions 22) of the first light-diffusing sheet 43 which is farthest from the light source 42 is a light exit surface.

In the backlight unit 40 according to the present embodiment, at least one second light-diffusing sheet 44 (another light-diffusing sheet) which does not have depressed portions formed in an approximately inverted polygonal pyramid or an approximately inverted truncated polygonal pyramid may be further provided between the display screen 50a and the light source 42. Accordingly, both brightness and brightness uniformity can be improved by a combination of light-diffusing sheets of different types.

When providing the second light-diffusing sheet 44, the first light-diffusing sheet 43 may be provided in plurality and both surfaces of the second light-diffusing sheet 44 may be matte surfaces of which surface roughness Ra is 0.1 µm or more and 10 µm or less. Accordingly, both brightness and brightness uniformity can be further improved. In this case, preferably, the first surface 43a of the first light-diffusing sheet 43 which is farthest from the light source 42 among the plurality of first light-diffusing sheets 43 is a light exit surface, the second light-diffusing sheet 44 is arranged so as to face the first surface 43a, a difference in surface roughness Ra between both surfaces of the second light-diffusing sheet 44 is 0.5 µm or more, and the surface with smaller surface roughness Ra in the second light-diffusing sheet 44 is a light incident surface. In addition, preferably, the second light-diffusing sheet 44 contains 0.5 parts by mass or more and 1.5 parts by mass or less of a light-diffusing agent per 100 parts by mass of a matrix resin.

When providing the second light-diffusing sheet 44, the second light-diffusing sheet 44 may contain a light-diffusing agent and may be arranged so as to face a light exit surface of the first light-diffusing sheet 43 (when the first light-diffusing sheet 43 is provided in plurality, the first light-diffusing sheet 43 which is farthest from the light source 42), and the brightness-improving sheet 47 arranged so as to face the light exit surface of the second light-diffusing sheet 44 may be further provided. Accordingly, both brightness and brightness uniformity can be further improved.

When providing the second light-diffusing sheet 44, the second light-diffusing sheet 44 may be arranged closer to the first prism sheet 45 (in other words, closer to the display screen 50a) than the first light-diffusing sheet 43 (when the first light-diffusing sheet 43 is provided in plurality, the first light-diffusing sheet 43 which is farthest from the light source 42). Accordingly, both brightness and brightness uniformity can be further improved. In this case, the first light-diffusing sheet 43 (when the first light-diffusing sheet 43 is provided in plurality, the first light-diffusing sheet 43 which is farthest from the light source 42) may be arranged so that the second surface 43b faces the light source 42. Accordingly, both brightness and brightness uniformity can be even further improved.

In the backlight unit 40 according to the present embodiment, brightness uniformity is further improved by arranging the light source 42 on the reflecting sheet 41 provided on an opposite side to the display screen 50a as viewed from the first light-diffusing sheet 43.

The liquid crystal display device 50 according to the present embodiment includes the backlight unit 40 according to the present embodiment and the liquid crystal display panel 5.

Since the liquid crystal display device 50 according to the present embodiment and an information apparatus including the liquid crystal display device 50 include the backlight unit 40 according to the present embodiment, brightness uniformity can be improved while avoiding a decline in brightness over the entire screen.

### (Examples)

Hereinafter, examples will be described, together with comparative examples and reference examples.

### < Light-diffusing Sheets Used >

Table 1 shows configurations, optical characteristics, and the like of light-diffusing sheets (sheets #1 to #16) of various types used in the examples, comparative examples, and reference examples. Note that in Table 1, "width Wr of ridgeline" means "width of curved portion of vertex of ridgeline" or, in other words, "width of boundary portion between depressed portions".

**[Table 1]**

| Sheet | Thickness | Composition | | Shape of inverted square pyramid | | | | | Surface shape/roughness | | | | Optical properties | | |
|---|---|---|---|---|---|---|---|---|---|---|---|---|---|---|---|
| | | Resin | Diffusing agent | Pitch P | Vertex angle | Width Wr of ridgeline | Wr/P | Height H of inverted square pyramid | First surface | Ra | Second surface | Ra | Light transmittance at 450 nm | Light reflectance at 450 nm | Haze |
| | µm | Parts by mass | Parts by mass | µm | Degrees | µm | % | µm | | µm | | µm | % | % | % |
| 1 | 650 | 100 | 0 | 180 | 80 | 36 | 20 | 87 | Inverted square pyramid | - | Matte surface | 0.47 | 94 | 4.9 | 90.1 |
| 2 | 650 | 100 | 0.8 | 180 | 80 | 41 | 23 | 85 | Inverted square pyramid | - | Matte surface | 0.39 | 71 | 26 | 94.6 |
| 3 | 650 | 100 | 0 | 500 | 80 | 40 | 8 | 259 | Inverted square pyramid | - | Matte surface | 0.45 | 96 | 4.4 | 92.2 |
| 4 | 750 | 100 | 0 | 500 | 80 | 52 | 10 | 249 | Inverted square pyramid | - | Matte surface | 0.41 | 95 | 52 | 92.0 |
| 5 | 850 | 100 | 0 | 500 | 80 | 64 | 13 | 239 | Inverted square pyramid | - | Matte surface | 0.38 | 95 | 53 | 91.4 |
| 6 | 1000 | 100 | 0 | N/A | | | | | Matte surface 1 | 2.3 | Matte surface 2 | 0.91 | 87 | 8.5 | 19.8 |
| 7 | 1000 | 100 | 0.8 | N/A | | | | | Matte surface | 3.2 | Mirror surface | 0.04 | 65 | 28 | 94.3 |
| 8 | 1000 | 100 | 0.8 | N/A | | | | | Matte surface 1 | 2.2 | Matte surface 2 | 0.92 | 65 | 26 | 94.6 |
| 9 | 1000 | 100 | 2.0 | N/A | | | | | Matte surface 1 | 4.0 | Matte surface 2 | 0.53 | 57 | 40 | 94.6 |
| 10 | 1200 | 100 | 0.8 | N/A | | | | | Matte surface 1 | 1.9 | Matte surface 2 | 0.90 | 61 | 28 | 94.6 |
| 11 | 650 | 100 | 0 | 500 | 80 | 175 | 35 | 180 | Inverted square pyramid | - | Matte surface | 0.47 | 96 | 4.0 | 88.7 |
| 12 | 650 | 100 | 0 | 250 | 80 | 38 | 15 | 130 | Inverted square pyramid | - | Matte surface | 0.47 | 95 | 4.7 | 90.5 |
| 13 | 650 | 100 | 0 | 320 | 80 | 40 | 13 | 166 | Inverted square pyramid | - | Matte surface | 0.47 | 95 | 4.6 | 91.5 |
| 14 | 450 | 100 | 0 | 500 | 80 | 24 | 5 | 284 | Inverted square pyramid | - | Matte surface | 20 | 111 | 5.1 | 93.6 |
| 15 | 1200 | 100 | 2.0 | N/A | | | | | Matte surface 1 | 2.1 | Matte surface 2 | 0.68 | 56 | 42 | 94.7 |
| 16 | 650 | 100 | 0 | 500 | 80 | 40 | 8 | 263 | Inverted square pyramid | - | Matte surface | 8.0 | 101 | 11 | 94.4 |

Sheet #1 was created as follows. First, an aromatic polycarbonate resin of which a melt mass-flow rate as measured in conformity with ISO 1133 is 15 g/10 minutes is fed into an extruder, melted and kneaded, and extruded by a T-die. Subsequently, using a roll having, on a surface thereof, a shape (a shape of a right square pyramid with a height of 107 µm, a pitch of 180 µm, and a vertex angle of 80 degrees) shown in (A) and (B) ((B) is a shape diagram representing a view from a direction of a cross section taken along line X-Y in (A)) in Fig. 16 as a casting roll being one of two metal rolls and using a roll having, on a surface thereof, a random matte shape (surface roughness Ra = 2.6 µm) as a hold-down roll being the other roll, the molten resin extruded by the T-die is sandwiched between the two rolls and cooled while performing shape transfer. Accordingly, sheet #1 that is a single layer with a thickness of 650 µm was created by the extrusion molding method. As shown in Table 1, sheet #1 does not include a diffusing agent, depressed portions (inverted square pyramids) with a height (depth) H dependent on a height of the right square pyramid on the roll being 87 µm are provided on one surface (first surface 43a), and the other surface (second surface 43b) is a matte surface with surface roughness Ra = 0.47 µm. In addition, the array pitch P, the vertex angle, the width Wr of the ridgeline, and Wr/P of the inverted square pyramids are 180 µm, 80 degrees, 36 µm, and 20%, respectively.

With respect to sheet #2, sheet #2 with a thickness of 650 µm was created by feeding a mixture prepared in advance by mixing 0.8 parts by mass of a silicone composite powder (average particle size 2.0 µm) as a diffusing agent with 100 parts by mass of the same aromatic polycarbonate resin as sheet #1 to the extruder and performing steps similar to sheet #1. As shown in Table 1, sheet #2 includes 0.8 parts by mass of a diffusing agent per 100 parts by mass of a matrix resin, depressed portions (inverted square pyramids) with a height (depth) H dependent on a height of the right square pyramid on the roll being 85 µm are provided on one surface (first surface 43a), and the other surface (second surface 43b) is a matte surface with surface roughness Ra = 0.39 µm. In addition, the array pitch P, the vertex angle, the width Wr of the ridgeline, and Wr/P of the inverted square pyramids are 180 µm, 80 degrees, 41 µm, and 23%, respectively.

With respect to sheets #3 to #5, using the same resin as sheet #1, using a roll having, on a surface thereof, a shape (a shape of a right square pyramid with a height of approximately 300 µm, a pitch of 500 µm, and a vertex angle of 80 degrees) shown in (A) and (B) in Fig. 16 as a casting roll being one roll and using a roll having, on a surface thereof, a random matte shape similar to that of sheet #1 as a hold-down roll being the other roll, sheets #3 to #5 were created by adjusting the rolls so as to attain a thickness of 650 µm for sheet #3, 750 µm for sheet #4, and 850 µm for sheet #5. The surface roughness of the hold-down roll and manufacturing conditions were selected so that sheets with target surface roughness were obtained. As shown in Table 1, sheets #3 to #5 do not include a diffusing agent. In sheet #3, depressed portions (inverted square pyramids) with a height (depth) H dependent on a height of the right square pyramid on the roll being 259 µm are provided on one surface (first surface 43a), the other surface (second surface 43b) is a matte surface with surface roughness Ra = 0.45 µm, and the array pitch P, the vertex angle, the width Wr of the ridgeline, and Wr/P of the inverted square pyramids are 500 µm, 80 degrees, 40 µm, and 8%, respectively. In sheet #4, depressed portions (inverted square pyramids) with a height (depth) H dependent on a height of the right square pyramid on the roll being 249 µm are provided on one surface (first surface 43a), the other surface (second surface 43b) is a matte surface with surface roughness Ra = 0.41 µm, and the array pitch P, the vertex angle, the width Wr of the ridgeline, and Wr/P of the inverted square pyramids are 500 µm, 80 degrees, 52 µm, and 10%, respectively. In sheet #5, depressed portions (inverted square pyramids) with a height (depth) H dependent on a height of the right square pyramid on the roll being 239 µm are provided on one surface (first surface 43a), the other surface (second surface 43b) is a matte surface with surface roughness Ra = 0.38 µm, and the array pitch P, the vertex angle, the width Wr of the ridgeline, and Wr/P of the inverted square pyramids are 500 µm, 80 degrees, 64 µm, and 13%, respectively.

With respect to light-diffusing sheets of which both surfaces are matte surfaces of sheets #6, #8 to #10, and #15, respectively using a resin and a diffusing agent of the compositions shown in Table 1, using a matte roll with surface roughness Ra of 4.5 µm as a casting roll being a roll for the first surface, and using the roll used in sheet #1 (a roll having a random matte shape (surface roughness Ra = 2.6 µm) on a surface thereof) as a hold-down roll being a roll for the second surface, sheets #6, #8 to #10, and #15 including a matte surface 1 (M1 surface) with relatively large surface roughness Ra and a matte surface 2 (M2 surface) with relatively small surface roughness Ra were created. As shown in Table 1, sheet #6 has a thickness of 1000 µm, does not include a diffusing agent, one surface (first surface 43a) is a matte surface with surface roughness Ra = 2.3 µm, and the other surface (second surface 43b) is a matte surface with surface roughness Ra = 0.91 µm. As shown in Table 1, sheet #8 has a thickness of 1000 µm, includes 0.8 parts by mass of a diffusing agent per 100 parts by mass of a matrix resin, one surface (first surface 43a) is a matte surface with surface roughness Ra = 2.2 µm, and the other surface (second surface 43b) is a matte surface with surface roughness Ra = 0.92 µm. As shown in Table 1, sheet #9 has a thickness of 1000 µm, includes 2.0 parts by mass of a diffusing agent per 100 parts by mass of a matrix resin, one surface (first surface 43a) is a matte surface with surface roughness Ra = 4.0 µm, and the other surface (second surface 43b) is a matte surface with surface roughness Ra = 0.53 µm. As shown in Table 1, sheet #10 has a thickness of 1200 µm, includes 0.8 parts by mass of a diffusing agent per 100 parts by mass of a matrix resin, one surface (first surface 43a) is a matte surface with surface roughness Ra = 1.9 µm, and the other surface (second surface 43b) is a matte surface with surface roughness Ra = 0.90 µm. As shown in Table 1, sheet #15 has a thickness of 1200 µm, includes 2.0 parts by mass of a diffusing agent per 100 parts by mass of a matrix resin, one surface (first surface 43a) is a matte surface with surface roughness Ra = 2.1 µm, and the other surface (second surface 43b) is a matte surface with surface roughness Ra = 0.68 µm.

With respect to sheet #7, using a resin and a diffusing agent of the compositions shown in Table 1, using the same matte roll as sheet #6 with surface roughness Ra of 4.5 µm as a casting roll being a roll for the first surface, and using a mirror surface roll as a hold-down roll being a roll for the second surface, sheet #7 including a rough matte surface and a mirror surface was created. As shown in Table 1, sheet #7 has a thickness of 1000 µm, includes 0.8 parts by mass of a diffusing agent per 100 parts by mass of a matrix resin, one surface (first surface 43a) is a matte surface with surface roughness Ra = 3.2 µm, and the other surface (second surface 43b) is a mirror surface (flat surface) with surface roughness Ra = 0.04 µm.

With respect to sheet #11, while using a same roll with a same resin composition as sheet #3, as a result of performing molding by reducing compression linear pressure of the roll, sheet #11 with a thickness of 650 µm and a low shape transfer rate was obtained. As shown in Table 1, sheet #11 does not include a diffusing agent, depressed portions (inverted square pyramids) with a height (depth) H dependent on a height of the right square pyramid on the roll being 180 µm are provided on one surface (first surface 43a), and the other surface (second surface 43b) is a matte surface with surface roughness Ra = 0.47 µm. In addition, the array pitch P, the vertex angle, the width Wr of the ridgeline, and Wr/P of the inverted square pyramids are 500 µm, 80 degrees, 175 µm, and 35%, respectively.

With respect to sheet #12, using the same resin as sheet #1, using a roll having, on a surface thereof, a shape (a shape of a right square pyramid with a height of approximately 149 µm, a pitch of 250 µm, and a vertex angle of 80 degrees) similar to (A) and (B) in Fig. 16 as a casting roll being one roll and using a roll having, on a surface thereof, the same random matte shape as sheet #1 as a hold-down roll being the other roll, sheet #12 was created by adjusting the rolls so as to attain a thickness of 650 µm. As shown in Table 1, sheet #12 does not include a diffusing agent, depressed portions (inverted square pyramids) with a height (depth) H dependent on a height of the right square pyramid on the roll being 130 µm are provided on one surface (first surface 43a), and the other surface (second surface 43b) is a matte surface with surface roughness Ra = 0.47 µm. In addition, the array pitch P, the vertex angle, the width Wr of the ridgeline, and Wr/P of the inverted square pyramids are 250 µm, 80 degrees, 38 µm, and 15%, respectively.

With respect to sheet #13, using the same resin as sheet #1, using a roll having, on a surface thereof, a shape (a shape of a right square pyramid with a height of approximately 191 µm, a pitch of 320 µm, and a vertex angle of 80 degrees) similar to (A) and (B) in Fig. 16 as a casting roll being one roll and using a roll having, on a surface thereof, the same random matte shape as sheet #1 as a hold-down roll being the other roll, sheet #13 was created by adjusting the rolls so as to attain a thickness of 650 µm. As shown in Table 1, sheet #13 does not include a diffusing agent, depressed portions (inverted square pyramids) with a height (depth) H dependent on a height of the right square pyramid on the roll being 166 µm are provided on one surface (first surface 43a), and the other surface (second surface 43b) is a matte surface with surface roughness Ra = 0.47 µm. In addition, the array pitch P, the vertex angle, the width Wr of the ridgeline, and Wr/P of the inverted square pyramids are 320 µm, 80 degrees, 40 µm, and 13%, respectively.

With respect to sheets #14 and #16, using the same resin as sheet #1, using a roll having, on a surface thereof, a shape (a shape of a right square pyramid with a height of approximately 300 µm, a pitch of 500 µm, and a vertex angle of 80 degrees) shown in (A) and (B) in Fig. 16 as a casting roll being one roll and using a roll having, on a surface thereof, a random matte shape similar to that of sheet #1 as a hold-down roll being the other roll, sheets #14 and #16 were created by adjusting the rolls so as to attain a thickness of 450 µm for sheet #14 and a thickness of 650 µm for sheet #16. The surface roughness of the hold-down roll and manufacturing conditions were selected so that sheets with target surface roughness were obtained. As shown in Table 1, sheets #14 and #16 do not include a diffusing agent. In sheet #14, depressed portions (inverted square pyramids) with a height (depth) H dependent on a height of the right square pyramid on the roll being 284 µm are provided on one surface (first surface 43a), the other surface (second surface 43b) is a matte surface with surface roughness Ra = 2.0 µm, and the array pitch P, the vertex angle, the width Wr of the ridgeline, and Wr/P of the inverted square pyramids are 500 µm, 80 degrees, 24 µm, and 5%, respectively. In sheet #16, depressed portions (inverted square pyramids) with a height (depth) H dependent on a height of the right square pyramid on the roll being 263 µm are provided on one surface (first surface 43a), the other surface (second surface 43b) is a matte surface with surface roughness Ra = 8.0 µm, and the array pitch P, the vertex angle, the width Wr of the ridgeline, and Wr/P of the inverted square pyramids are 500 µm, 80 degrees, 40 µm, and 8%, respectively.

### < Measurement of Array Pitch of Depressed Portions, Vertex Angle, Width of Ridgeline, and Height of Inverted Square Pyramid >

Measurement of shapes of the depressed portions (inverted square pyramids) formed on sheets #1 to #5, #11 to #14, and #16 shown in Table 1 was performed using a laser microscope. Specifically, the array pitches Px and Py of the depressed portions 22 (horizontal distances between the intersections 23a in the X-direction and the Y-direction) shown in Figs. 7 and 8 were measured and an array pitch P was obtained as an average value thereof. In addition, the angles θx and θy (angles formed by the wall surfaces of the depressed portions 22 (inclined surfaces of the inverted right square pyramids) and the sheet surface in the X-direction and the Y-direction) shown in Figs. 10 and 11 were measured and a vertex angle (vertex angle = 180 degrees - (θx + θy)) was obtained based on an average value thereof. Furthermore, the dimensions Wrx and Wry (dimensions occupied by a curved portion of a vertex of the ridgelines 23 in the X-direction and the Y-direction) shown in Figs. 10 and 11 were measured and a width Wr of the ridgelines was obtained as an average value thereof. Note that a unit of the ratio Wr/P of the width Wr to the array pitch P is %. Moreover, the heights Hx and Hy (heights from the center 22a of the depressed portions 22 to the vertex of the ridgelines 23) shown in Figs. 10 and 11 were measured and a height H of the inverted square pyramid was obtained as an average value thereof.

### < Measurement of Surface Roughness (Ra) of Light-diffusing Sheet >

The surface roughness (Ra) of the matte surface or the mirror surface of sheets #1 to #16 shown in Table 1 was measured using SJ-210, manufactured by Mitutoyo Corporation, in conformity with JIS B-601.

### < Measurement of Optical Properties >

Light transmittance and light reflectance at a wavelength of 450 nm of sheets #1 to #16 shown in Table 1 were measured using V-670 manufactured by JASCO Corporation and Haze shown in Table 1 was measured using HZ-2, manufactured by Suga Test Instruments Co., Ltd., in conformity with JIS K7361:2000. The measurement of optical properties was respectively performed using: (1) a surface having inverted square pyramids as a light incident surface with respect to sheets #1 to #5, #11 to #14, and #16 that include inverted square pyramids; (2) a matte surface as the light incident surface with respect to sheet #7 including a matte surface and a mirror surface; and (3) a matte surface (M1 surface) with larger surface roughness (Ra) as the light incident surface with respect to sheets #6, #8 to #10, and #15 of which both surfaces are matte surfaces.

### < Measurement of Brightness and Brightness Uniformity >

A measurement of brightness and brightness uniformity in the examples, the reference examples, and the comparative examples to be described later was performed in a configuration similar to the backlight unit 40 shown in, for example, Fig. 2 or Fig. 5 using three light-diffusing sheets selected from sheets #1 to #16 shown in Table 1 and an LED array in which light sources 42 were arrayed as shown in Fig. 3. In other words, the measurement of brightness and brightness uniformity was performed by arranging optical sheets such as light-diffusing sheets and brightness-improving sheets on light sources (LEDs) 42 arranged in an array. Specifically, brightness and brightness uniformity were measured using blue LEDs (part number XPGDRY-L1-0000-00501) manufactured by CreeLED, Inc. to be the light sources 42 arrayed at a pitch of 12.5 mm as the LED array, arranging three light-diffusing sheets on the LED array, and stacking and arranging the brightness-improving sheet 47 (prism sheets 45 and 46) via a color-converting sheet on the light-diffusing sheets so that ridgelines of the prism sheets 45 and 46 were orthogonal to each other. Note that the three light-diffusing sheets used may include two or three sheets of a same type.

In the measurement of brightness uniformity, first, using an LED array (six by six) such as that shown in Fig. 3, a two-dimensional brightness distribution was measured on a surface of the brightness-improving sheet 47 of an uppermost layer in a sheet stack configuration of the backlight unit described earlier. Subsequently, an average value and a standard deviation were calculated with respect to actual measured brightness values of 22,500 points (150 points by 150 points at a pixel pitch of 0.25 mm) of all pixels within an area of three longitudinal LEDs by three lateral LEDs. The average value was used to assess brightness while brightness uniformity was obtained using the average value and the standard deviation of brightness according to a calculation formula expressed as 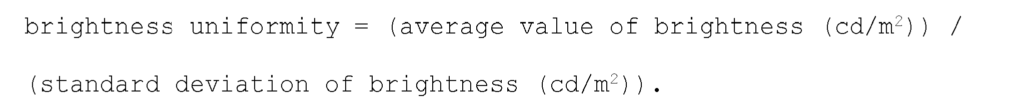 brightness uniformity = (average value of brightness (cd/m2)) / (standard deviation of brightness (cd/m2)). The brightness uniformity obtained in this manner show that, the higher a numerical value of the brightness uniformity, the more uniform the brightness.

### < Assessment of Brightness Uniformity >

An assessment of brightness uniformity of the examples, the comparative examples, and the reference examples to be described later was performed based on the following criteria.
AA: Value of brightness uniformity is 55 or more and brightness uniformity is exceptionally high.
A: Value of brightness uniformity is 45 or more and less than 55 and brightness uniformity is high.
B: Value of brightness uniformity is 35 or more and less than 45 and brightness uniformity is somewhat high.
C: Value of brightness uniformity is 25 or more and less than 35 and brightness uniformity meets minimum requirements.
X: Value of brightness uniformity is less than 25 and brightness uniformity is insufficient.

In Tables 2 to 5 (to be described later) showing an assessment result of brightness uniformity, orientations in which light-diffusing sheets are stacked are described as follows.
i) With respect to sheets #1 to #5, #11 to #14, and #16 of which the first surface includes inverted square pyramids and the second surface is a matte surface, a description of "under inverted square pyramid" is used when the first surface is a light incident surface and a description of "above inverted square pyramid" is used when the first surface is a light exit surface.
ii) With respect to sheet #7 of which the first surface is a matte surface and the second surface is a mirror surface, a description of "under M surface, above mirror surface" is used when the matte surface is a light incident surface and the mirror surface is a light exit surface and, conversely, a description of "under mirror surface, above M surface" is used when the mirror surface is a light incident surface and the matte surface is a light exit surface.
iii) With respect to sheets #6, #8 to #10, and #15 of which both surfaces are matte surfaces, if the matte surface with larger surface roughness Ra is denoted as an M1 surface and the matte surface with smaller surface roughness Ra is denoted as an M2 surface, a description of "under M1 surface" is used when the M1 surface is a light incident surface and the M2 surface is a light exit surface, and a description of "above M1 surface" is used when the M2 surface is a light incident surface and the M1 surface is a light exit surface.

### < Examples 1 to 8, Comparative Examples 1 to 4, and Reference Examples 1 and 2 >

In examples 1 to 8, comparative examples 1 to 4, and reference examples 1 and 2, three light-diffusing sheets selected from sheets #1 to #5 and #11 shown in Table 1 were stacked in an order and an orientation shown in Table 2 and a measurement of brightness and brightness uniformity was performed. Table 2 shows a total thickness of the three light-diffusing sheets, measured values of brightness and brightness uniformity, and an assessment result of the brightness uniformity.

**[Table 2]**

| | | | Example 1 | Example 2 | Example 3 | Example 4 | Example 5 | Example 6 | Example 7 | Example 8 | Comparative example 1 | Comparative example 2 | Comparative example 3 | Comparative example 4 | Reference example 1 | Reference example 2 |
|---|---|---|---|---|---|---|---|---|---|---|---|---|---|---|---|---|
| Type and arrangement of sheet | Third (screen side) | Sheet | 1 | 1 | 3 | 3 | 4 | 4 | 5 | 5 | 1 | 1 | 2 | 2 | 11 | 11 |
| | | Orientation of surface | Under inverted square pyramid | Above inverted square pyramid | Under inverted square pyramid | Above inverted square pyramid | Under inverted square pyramid | Above inverted square pyramid | Under inverted square pyramid | Above inverted square pyramid | Under inverted square pyramid | Above inverted square pyramid | Under inverted square pyramid | Above inverted square pyramid | Under inverted square pyramid | Above inverted square pyramid |
| | Second (middle) | Sheet | 3 | 3 | 3 | 3 | 4 | 4 | 5 | 5 | 1 | 1 | 1 | 1 | 11 | 11 |
| | | Orientation of surface | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid |
| | First (light source side) | Sheet | 3 | 3 | 3 | 3 | 4 | 4 | 5 | 5 | 1 | 1 | 1 | 1 | 11 | 11 |
| | | Orientation of surface | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid |
| Total thickness (mm) | | | 1.95 | 1.95 | 1.95 | 1.95 | 2.25 | 2.25 | 2.55 | 2.55 | 1.95 | 1.95 | 1.95 | 1.95 | 1.95 | 1.95 |
| Optical characteristics | Brightness (Cd/m²) | | 18139 | 19056 | 17909 | 18691 | 17341 | 18174 | 17220 | 17981 | 18188 | 18949 | 18953 | 19139 | 18510 | 18810 |
| | Brightness uniformity | | 30.9 | 25.0 | 33.0 | 26.8 | 38.9 | 31.7 | 65.7 | 49.5 | 21.1 | 22.0 | 21.2 | 24.3 | 24.1 | 22.3 |
| | Assessment of brightness uniformity | | C | C | C | C | B | C | AA | A | X | X | X | X | X | X |

As shown in Table 2, in examples 1 to 8, the use of two or more sheets #3 to #5 on which depressed portions with an inverted square pyramid shape are arrayed at a pitch of 500 µm enabled brightness uniformity to improve while suppressing a decline in brightness as compared to comparative examples 1 to 4 using sheets #1 and #2 on which depressed portions with an inverted square pyramid shape are arrayed at a pitch of 180 µm. In addition, as is apparent from a comparison between example 1 and example 2, a comparison between example 3 and example 4, a comparison between example 5 and example 6, and a comparison between example 7 and example 8, when stacking light-diffusing sheets of a same type in a same order, brightness uniformity can be further improved by using the surface provided with the depressed portions with inverted square pyramid shapes as a light incident surface with respect to the light-diffusing sheet that is farthest from the light source. As is apparent from reference examples 1 and 2, when using sheet #11 of which Wr/P exceeds 25% due to the width of the ridgeline (width of a boundary portion between depressed portions) being wide, brightness uniformity did not sufficiently improve even when depressed portions with inverted square pyramid shapes were arrayed at a pitch of 500 µm.

### < Examples 9 to 20 and Reference Examples 3 and 4 >

In examples 9 to 20 and reference examples 3 and 4, three light-diffusing sheets selected from sheets #3 to #5, #6, and #8 to #10 shown in Table 1 were stacked in an order and an orientation shown in Table 3 and a measurement of brightness and brightness uniformity was performed. Table 3 shows a total thickness of the three light-diffusing sheets, measured values of brightness and brightness uniformity, and an assessment result of the brightness uniformity. In examples 9 to 20 and reference examples 3 and 4, any of sheets #6 and #8 to #10 of which both surfaces are matte surfaces (that does not include depressed portions with inverted square pyramid shapes) was used as the light-diffusing sheet that is farthest from the light source and any of sheets #3 to #5 on which depressed portions with inverted square pyramid shapes are arrayed at a pitch of 500 µm was used as the other two light-diffusing sheets.

**[Table 3]**

| | | | Example 9 | Example 10 | Example 11 | Example 12 | Example 13 | Example 14 | Example 15 | Example 16 | Example 17 | Example 18 | Example 19 | Example 20 | Reference example 3 | Reference example 4 |
|---|---|---|---|---|---|---|---|---|---|---|---|---|---|---|---|---|
| Type and arrangement of sheet | Third (screen side) | Sheet | 10 | 10 | 8 | 8 | 10 | 10 | 8 | 8 | 8 | 8 | 9 | 9 | 6 | 6 |
| | | Orientation of surface | Above M1 surface | Under M1 surface | Above M1 surface | Under M1 surface | Above M1 surface | Under M1 surface | Above M1 surface | Under M1 surface | Above M1 surface | Under M1 surface | Above M1 surface | Under M1 surface | Above M1 surface | Under M1 surface |
| | Second (middle ) | Sheet | 3 | 3 | 4 | 4 | 4 | 4 | 5 | 5 | 3 | 3 | 3 | 3 | 3 | 3 |
| | | Orientation of surface | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid |
| | First (light source side) | Sheet | 3 | 3 | 4 | 4 | 4 | 4 | 5 | 5 | 3 | 3 | 3 | 3 | 3 | 3 |
| | | Orientation of surface | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid | Under inverted square pyramid |
| Total thickness (mm) | | | 2.5 | 2.5 | 2.5 | 2.5 | 2.7 | 2.7 | 2.7 | 2.7 | 2.3 | 2.3 | 2.3 | 2.3 | 2.3 | 2.3 |
| Optical characteristic s | Brightness (Cd/m²) | | 18525 | 18571 | 18334 | 18377 | 18080 | 18152 | 18184 | 18261 | 18790 | 18868 | 18562 | 18515 | 18862 | 18966 |
| | Brightness uniformity | | 50.4 | 38.8 | 47.0 | 34.3 | 55.6 | 42.4 | 62.0 | 42.9 | 40.6 | 31.9 | 27.9 | 27.5 | 21.6 | 19.7 |
| | Assessment of brightness uniformity | | A | B | A | C | AA | B | AA | B | B | C | C | C | X | X |

As shown in Table 3, in examples 9 to 20, arranging any of sheets #8 to #10 of which both surfaces are matte surfaces on top of two light-diffusing sheets selected from sheets #3 to #5 on which depressed portions with an inverted square pyramid shape are arrayed at a pitch of 500 µm enabled brightness uniformity to improve while suppressing a decline in brightness as compared to comparative examples 1 to 4 (refer to Table 2). In addition, as is apparent from a comparison between example 9 and example 10, a comparison between example 11 and example 12, a comparison between example 13 and example 14, between example 15 and example 16, a comparison between example 17 and example 18, and a comparison between example 19 and example 20, when stacking light-diffusing sheets of a same type in a same order, brightness uniformity can be further improved by using the M1 surface with larger surface roughness Ra of the matte surface as a light exit surface in sheets #8 to #10 of which both surfaces are matte surfaces or, in other words, using the M2 surface with smaller surface roughness Ra of the matte surface as a light incident surface. Furthermore, as is apparent from a comparison between examples 17 to 20 and reference examples 3 and 4, in order to improve brightness uniformity, light-diffusing sheets of which both surfaces are matte surfaces preferably contain a diffusing agent and, in particular, preferably contain 0.5 parts by mass or more and 1.5 parts by mass or less of the diffusing agent per 100 parts by mass of a matrix resin.

### < Examples 21 to 26 >

In examples 21 to 26, three light-diffusing sheets selected from sheets #1, #3, #5, and #7 shown in Table 1 were stacked in an order and an orientation shown in Table 4 and a measurement of brightness and brightness uniformity was performed. Table 4 shows a total thickness of the three light-diffusing sheets, measured values of brightness and brightness uniformity, and an assessment result of the brightness uniformity. In examples 21 to 26, sheet #7 including a rough matte surface and a mirror surface (that does not include depressed portions with inverted square pyramid shapes) was used as the light-diffusing sheet that is farthest from the light source and any of sheet #1 on which depressed portions with inverted square pyramid shapes are arrayed at a pitch of 180 µm and sheets #3 to #5 on which depressed portions with inverted square pyramid shapes are arrayed at a pitch of 500 µm was used as the other two light-diffusing sheets.

**[Table 4]**

| | | | Example 21 | Example 22 | Example 23 | Example 24 | Example 25 | Example 26 |
|---|---|---|---|---|---|---|---|---|
| Type and arrangement of sheet | Third (screen side) | Sheet | 7 | 7 | 7 | 7 | 7 | 7 |
| | | Orientation of surface | Under mirror surface, above M surface | Under M surface, above mirror surface | Under mirror surface, above M surface | Under M surface, above mirror surface | Under mirror surface, above M surface | Under M surface, above mirror surface |
| | Second (middle) | Sheet | 1 | 1 | 3 | 3 | 5 | 5 |
| | | Orientation of surface | Under inverted square pyramid | Under inverted square pyramid | Under inverted square pyramid | Under inverted square pyramid | Under inverted square pyramid | Under inverted square pyramid |
| | First (light source side) | Sheet | 3 | 3 | 3 | 3 | 5 | 5 |
| | | Orientation of surface | Under inverted square pyramid | Under inverted square pyramid | Under inverted square pyramid | Under inverted square pyramid | Under inverted square pyramid | Under inverted square pyramid |
| Total thickness (mm) | | | 2.3 | 2.3 | 2.3 | 2.3 | 2.7 | 2.7 |
| Optical characteristics | Brightness (Cd/m²) | | 19199 | 19212 | 19007 | 19002 | 18465 | 18499 |
| | Brightness uniformity | | 29.3 | 30.6 | 32.7 | 32.6 | 45.5 | 46.7 |
| | Assessment of brightness uniformity | | C | C | C | C | A | A |

As shown in Table 4, in examples 21 to 26, arranging sheet #7 including a matte surface and a mirror surface on top of two light-diffusing sheets selected from sheets #1, #3, and #5 on which depressed portions with an inverted square pyramid shape are arrayed enabled brightness uniformity to improve while suppressing a decline in brightness as compared to comparative examples 1 to 4 (refer to Table 2). In addition, in examples 21 to 22, an effect of improving brightness uniformity was produced even when using a single light-diffusing sheet (sheet #3) on which depressed portions with inverted square pyramid shapes are arrayed at a pitch of 500 µm. As is apparent from a comparison between example 25 and example 15 (refer to Table 3) and a comparison between example 26 and example 16 (refer to Table 3), brightness uniformity can be further improved by using sheet #8 (with same diffusing agent concentration as sheet #7) of which both surfaces are matte surfaces as the light-diffusing sheet that is farthest from the light source as compared to sheet #7 including a matte surface and a mirror surface.

### < Examples 27 and 28 and Comparative Examples 5 and 6 >

In examples 27 and 28, three of sheet #13 shown in Table 1 were stacked in an orientation shown in Table 5, in comparative examples 5 and 6, three of sheet #12 shown in Table 1 were stacked in an orientation shown in Table 5, and measurements of brightness and brightness uniformity were respectively performed. Table 5 shows a total thickness of the three light-diffusing sheets, measured values of brightness and brightness uniformity, and an assessment result of the brightness uniformity.

**[Table 5]**

| | | | Example 27 | Example 28 | Comparative example 5 | Comparative example 6 |
|---|---|---|---|---|---|---|
| Type and arrangement of sheet | Third (screen side) | Sheet | 13 | 13 | 12 | 12 |
| | | Orientation of surface | Under inverted square pyramid | Above inverted square pyramid | Under inverted square pyramid | Above inverted square pyramid |
| | Second (middle) | Sheet | 13 | 13 | 12 | 12 |
| | | Orientation of surface | Under inverted square pyramid | Under inverted square pyramid | Under inverted square pyramid | Under inverted square pyramid |
| | First (light source side) | Sheet | 13 | 13 | 12 | 12 |
| | | Orientation of surface | Under inverted square pyramid | Under inverted square pyramid | Under inverted square pyramid | Under inverted square pyramid |
| Total thickness (mm) | | | 1.95 | 1.95 | 1.95 | 1.95 |
| Optical characteristics | Brightness (Cd/m²) | | 18050 | 187020 | 18010 | 18854 |
| | Brightness uniformity | | 30.5 | 26.0 | 24.0 | 22.0 |
| | Assessment of brightness uniformity | | C | C | X | X |

As shown in Table 5, in examples 27 and 28 using sheet #13 of which the array pitch P of inverted square pyramids is 320 µm, brightness uniformity can be improved while suppressing a decline in brightness as compared to comparative examples 1 to 4 (refer to Table 2). However, in comparative examples 5 and 6 using sheet #12 of which the array pitch P of inverted square pyramids is 250 µm, brightness uniformity could not be improved.

### < Examples 29 to 33 >

In examples 29 to 33, three light-diffusing sheets selected from sheets #3, #5, #10, #14, #15, and #16 shown in Table 1 were stacked in an order and an orientation shown in Table 6 and a measurement of brightness and brightness uniformity was performed. Table 6 shows a total thickness of the three light-diffusing sheets, measured values of brightness and brightness uniformity, and an assessment result of the brightness uniformity.

**[Table 6]**

| | | | Example 29 | Example 30 | Example 31 | Example 32 | Example 33 |
|---|---|---|---|---|---|---|---|
| Type and arrangement of sheet | Third (screen side) | Sheet | 10 | 15 | 10 | 15 | 10 |
| | | Orientation of surface | Above M1 surface | Above M1 surface | Above M1 surface | Above M1 surface | Above M1 surface |
| | Second (middle) | Sheet | 5 | 5 | 3 | 3 | 16 |
| | | Orientation of surface | Under inverted square pyramid | Under inverted square pyramid | Above inverted square pyramid | Above inverted square pyramid | Above inverted square pyramid |
| | First (light source side) | Sheet | 14 | 14 | 3 | 3 | 16 |
| | | Orientation of surface | Under inverted square pyramid | Under inverted square pyramid | Above inverted square pyramid | Above inverted square pyramid | Above inverted square pyramid |
| Total thickness (mm) | | | 2.5 | 2.5 | 2.5 | 2.5 | 2.5 |
| Optical characteristics | Brightness (Cd/m²) | | 18588 | 18463 | 18308 | 17964 | 19118 |
| | Brightness uniformity | | 53.6 | 37.4 | 56.9 | 56.2 | 63.7 |
| | Assessment of brightness uniformity | | A | B | AA | AA | AA |

As shown in Table 6, in examples 31 to 33, using the surface provided with depressed portions with an inverted square pyramid shape as a light exit surface in sheets #3 and #16 of which the array pitch P of inverted square pyramids is 500 µm as the first and second sheets and sheet #10 or #15 of which both surfaces are matte surfaces (that does not include depressed portions with inverted square pyramid shapes) as the third sheet enables high brightness uniformity to be produced. In particular, in example 33, using sheet #16 of which the first surface is provided with depressed portions with inverted square pyramid shapes and the second surface is a matte surface with surface roughness (Ra) of 8.0 µm as the first and second sheets and using the first surface as a light exit surface, and using sheet #10 of which both surfaces are matte surfaces (that does not include depressed portions with inverted square pyramid shapes) as the third sheet enables high brightness and high brightness uniformity to be produced.

### (Other Embodiments)

While an embodiment (including examples: the same applies hereinafter) of the present disclosure has been described above, the present disclosure is not solely limited to the embodiment described above and various modifications can be made within the scope of the disclosure. In other words, the foregoing description of the embodiment is illustrative in nature and is not intended to limit the present disclosure, its applications, or its uses.

For example, a configuration (layer structure, material, and the like) of a light-diffusing sheet is not limited to the configuration of the first light-diffusing sheet 43 according to the embodiment described above as long as the light-diffusing sheet "includes a plurality of depressed portions formed in an approximately inverted polygonal pyramid or an approximately inverted truncated polygonal pyramid on at least a first surface, an array pitch of the depressed portions is 300 µm or more and 1500 µm or less, and a width of a boundary portion between the depressed portions is 25% of the array pitch or less".

In addition, for example, a configuration of a backlight to which the light-diffusing sheet is applied and a configuration of a liquid crystal display device including the backlight are also not limited to the configurations of the backlight unit 40 and the liquid crystal display device 50 according to the embodiment described above as long as the backlight unit 40 or the liquid crystal display device 50 includes at least one light-diffusing sheet in which "a plurality of depressed portions formed in an approximately inverted polygonal pyramid or an approximately inverted truncated polygonal pyramid are provided on at least a first surface, an array pitch of the depressed portions is 300 µm or more and 1500 µm or less, and a width of a boundary portion between the depressed portions is 25% of the array pitch or less". In other words, as long as at least one light-diffusing sheet according to the present invention is provided, other optical sheets with different structures can be appropriately combined and used insofar as the advantageous effects of the present invention are not impaired. For example, a single light-diffusing sheet in which "a plurality of depressed portions formed in an approximately inverted square pyramid are provided on a first surface, an array pitch of the depressed portions is 300 µm or more and 1500 µm or less, and a width of a boundary portion between the depressed portions is 25% of the array pitch or less" may be used in combination with another single light-diffusing sheet in which "a plurality of depressed portions with a similar shape to the depressed portions of the light-diffusing sheet are provided on a first surface and an array pitch of the depressed portions is 300 µm or less".

### [Reference Signs List]

- 1: TFT substrate
- 2: CF substrate
- 3: Liquid crystal layer
- 5: Liquid crystal display panel
- 6: First polarizing plate
- 7: Second polarizing plate
- 21: Base material layer
- 22: Depressed portion
- 22a: Center
- 23: Ridgeline
- 23a: Intersection
- 23b: Lowest point
- 40: Backlight unit
- 41: Reflecting sheet
- 42: Light source
- 43: First light-diffusing sheet
- 43a: First surface
- 43b: Second surface
- 44: Second light-diffusing sheet
- 44a: First surface
- 44b: Second surface
- 45: First prism sheet
- 46: Second prism sheet
- 47: Brightness-improving sheet
- 50: Liquid crystal display device
- 50a: Display screen

## Claims

1. A light-diffusing sheet (43) including a plurality of depressed portions (22) formed in an approximately inverted polygonal pyramid or an approximately inverted truncated polygonal pyramid on at least a first surface (43a), wherein
an array pitch of the plurality of depressed portions (22) is 300 µm or more and 1500 µm or less,
a width of a boundary portion between adjacent depressed portions (22) in the plurality of depressed portions (22) is 25% of the array pitch (P) or less, and
ridgelines (23) partitioning the plurality of depressed portions (22) have a depressed shape between intersections (23a) of the ridgelines (23), with respect to a straight line connecting the intersections (23a).

2. The light-diffusing sheet (43) according to claim 1,
wherein
the array pitch is 1000 µm or less.

3. The light-diffusing sheet (43) according to claim 1,
wherein
the width of the boundary portion is a width of a curved portion of a vertex of ridgelines (23) that partition the plurality of depressed portions (22).

4. The light-diffusing sheet (43) according to claim 3,
wherein
the plurality of depressed portions (22) is formed in an approximately inverted square pyramid or an approximately inverted truncated square pyramid,
the ridgelines (23) extend in a first direction (X) and a second direction (Y),
the array pitch is an average value (P) of a first array pitch (Px) of the plurality of depressed portions (22) in the first direction (X) and a second array pitch (Py) of the plurality of depressed portions (22) in the second direction (Y), and
the width of the boundary portion is an average value (Wr) of a width (Wrx) occupied by a curved portion of a vertex of the ridgelines (23) in the first direction (X) and a width (Wry) occupied by a curved portion of a vertex of the ridgelines (23) in the second direction (Y).

5. The light-diffusing sheet (43) according to claim 1,
wherein
an angle formed between a wall surface of the plurality of depressed portions (22) and a sheet surface of the light-diffusing sheet (43) is 40 degrees or more and 65 degrees or less.

6. The light-diffusing sheet (43) according to claim 1,
wherein
the plurality of depressed portion (22) are only provided on the first surface (43a), and
a second surface (43b) of the light-diffusing sheet (43) is a flat surface or a matte surface.

7. A backlight unit (40) which is built into a liquid crystal display device (50) and which guides light emitted by a light source (42) toward a display screen (50a), the backlight unit (40) comprising:
at least one light-diffusing sheet (43) according to any one of claims 1 to 6 between the display screen (50a) and the light source (42).

8. The backlight unit (40) according to claim 7, comprising:
a plurality of the light-diffusing sheets (43), wherein
the first surface (43a) of a light-diffusing sheet (43) which is farthest from the light source (42) among the plurality of light-diffusing sheets (43) is a light incident surface.

9. The backlight unit (40) according to claim 7, further comprising:
at least another light-diffusing sheet (44) which does not have depressed portions (22) formed in an approximately inverted polygonal pyramid or an approximately inverted truncated polygonal pyramid between the display screen (50a) and the light source (42).

10. The backlight unit (40) according to claim 9, comprising:
a plurality of the light-diffusing sheets (43), wherein
the other light-diffusing sheet (44) is arranged between the display screen (50a) and the plurality of light-diffusing sheets (43), and
both surfaces of the other light-diffusing sheet (44) are matte surfaces of which surface roughness Ra is 0.1 µm or more and 10 µm or less, wherein preferably,
a difference in surface roughness Ra between both surfaces of the other light-diffusing sheet (44) is 0.5 µm or more, and
a surface with smaller surface roughness Ra of the other light-diffusing sheet (44) is a light incident surface.

11. The backlight unit (40) according to claim 10, wherein
the other light-diffusing sheet (44) contains 0.5 parts by mass or more and 1.5 parts by mass or less of a light-diffusing agent per 100 parts by mass of a matrix resin.

12. The backlight unit (40) according to claim 9, wherein
the other light-diffusing sheet (44) contains a light-diffusing agent and is arranged so as to face a light exit surface of the light-diffusing sheet (43), and
a brightness-improving sheet (47) arranged so as to face a light exit surface of the other light-diffusing sheet (44) is further provided.

13. The backlight unit (40) according to claim 9, wherein
the other light-diffusing sheet (44) is arranged closer to the display screen (50a) than the light-diffusing sheet (43), wherein preferably,
the light-diffusing sheet (43) is the light-diffusing sheet according to claim 6, and
the light-diffusing sheet is arranged so that the second surface (43b) faces the light source (42).

14. A liquid crystal display device (50), comprising:
the backlight unit (40) according to claim 7; and
a liquid crystal display panel (5).

15. An information apparatus, comprising:
the liquid crystal display device (50) according to claim 14.

## Patentansprüche

1. Eine lichtstreuende Folie (43) mit einer Vielzahl von Vertiefungen (22), die auf mindestens einer ersten Oberfläche (43a) in Form einer annähernd umgekehrten polygonalen Pyramide oder einer annähernd umgekehrten, abgestumpften polygonalen Pyramide ausgebildet sind,
wobei
ein Array-Abstand der Vielzahl von Vertiefungen (22) 300 µm oder mehr und 1500 µm oder weniger beträgt,
eine Breite eines Grenzabschnitts zwischen benachbarten Vertiefungen (22) in der Vielzahl von Vertiefungen (22) 25 % des Array-Abstands (P) oder weniger beträgt, und Gratlinien (23), die die Vielzahl von Vertiefungen (22) unterteilen, zwischen Schnittpunkten (23a) der Gratlinien (23) eine vertiefte Form in Bezug auf eine die Schnittpunkte (23a) verbindende Gerade aufweisen.

2. Die lichtstreuende Folie (43) nach Anspruch 1, wobei der Array-Abstand 1000 µm oder weniger beträgt.

3. Die lichtstreuende Folie (43) nach Anspruch 1, wobei die Breite des Grenzabschnitts eine Breite eines gekrümmten Abschnitts eines Scheitelpunkts von Gratlinien (23) ist, die die Vielzahl von Vertiefungen (22) unterteilen.

4. Die lichtstreuende Folie (43) nach Anspruch 3, wobei die Vielzahl von Vertiefungen (22) in Form einer annähernd umgekehrten quadratischen Pyramide oder einer annähernd umgekehrten, abgestumpften quadratischen Pyramide ausgebildet ist,
die Gratlinien (23) sich in einer ersten Richtung (X) und einer zweiten Richtung (Y) erstrecken,
der Array-Abstand ein Mittelwert (P) aus einem ersten Array-Abstand (Px) der Vielzahl von Vertiefungen (22) in der ersten Richtung (X) und einem zweiten Array-Abstand (Py) der Vielzahl von Vertiefungen (22) in der zweiten Richtung (Y) ist, und
die Breite des Grenzabschnitts ein Mittelwert (Wr) aus einer Breite (Wrx), die von einem gekrümmten Abschnitt eines Scheitelpunkts der Gratlinien (23) in der ersten Richtung (X) eingenommen wird, und einer Breite (Wry), die von einem gekrümmten Abschnitt eines Scheitelpunkts der Gratlinien (23) in der zweiten Richtung (Y) eingenommen wird, ist.

5. Die lichtstreuende Folie (43) nach Anspruch 1, wobei ein Winkel, der zwischen einer Wandfläche der Vielzahl von Vertiefungen (22) und einer Folienoberfläche der lichtstreuenden Folie (43) gebildet wird, 40 Grad oder mehr und 65 Grad oder weniger beträgt.

6. Die lichtstreuende Folie (43) nach Anspruch 1, wobei
die Vielzahl von Vertiefungen (22) nur auf der ersten Oberfläche (43a) vorgesehen ist, und
eine zweite Oberfläche (43b) der lichtstreuenden Folie (43) eine ebene Oberfläche oder eine matte Oberfläche ist.

7. Eine Hintergrundbeleuchtungseinheit (40), die in eine Flüssigkristallanzeigevorrichtung (50) eingebaut ist und die von einer Lichtquelle (42) emittiertes Licht zu einem Bildschirm (50a) lenkt, wobei die Hintergrundbeleuchtungseinheit (40) umfasst:
mindestens eine lichtstreuende Folie (43) nach einem der Ansprüche 1 bis 6 zwischen dem Bildschirm (50a) und der Lichtquelle (42).

8. Die Hintergrundbeleuchtungseinheit (40) nach Anspruch 7, umfassend:
eine Vielzahl der lichtstreuenden Folien (43), wobei die erste Oberfläche (43a) einer lichtstreuenden Folie (43), die unter der Vielzahl von lichtstreuenden Folien (43) am weitesten von der Lichtquelle (42) entfernt ist, eine Lichteinfallsfläche ist.

9. Die Hintergrundbeleuchtungseinheit (40) nach Anspruch 7, ferner umfassend:
mindestens eine weitere lichtstreuende Folie (44), die keine in Form einer annähernd umgekehrten polygonalen Pyramide oder einer annähernd umgekehrten, abgestumpften polygonalen Pyramide ausgebildeten Vertiefungen (22) aufweist, zwischen dem Bildschirm (50a) und der Lichtquelle (42).

10. Die Hintergrundbeleuchtungseinheit (40) nach Anspruch 9, umfassend:
eine Vielzahl der lichtstreuenden Folien (43), wobei
die weitere lichtstreuende Folie (44) zwischen dem Bildschirm (50a) und der Vielzahl von lichtstreuenden Folien (43) angeordnet ist, und
beide Oberflächen der weiteren lichtstreuenden Folie (44) matte Oberflächen sind, deren Oberflächenrauheit Ra 0,1 µm oder mehr und 10 µm oder weniger beträgt, wobei vorzugsweise
ein Unterschied in der Oberflächenrauheit Ra zwischen beiden Oberflächen der weiteren lichtstreuenden Folie (44) 0,5 µm oder mehr beträgt, und
eine Oberfläche mit geringerer Oberflächenrauheit Ra der weiteren lichtstreuenden Folie (44) eine Lichteinfallsfläche ist.

11. Die Hintergrundbeleuchtungseinheit (40) nach Anspruch 10, wobei die weitere lichtstreuende Folie (44) 0,5 Masseteile oder mehr und 1,5 Masseteile oder weniger eines lichtstreuenden Mittels pro 100 Masseteile eines Matrixharzes enthält.

12. Die Hintergrundbeleuchtungseinheit (40) nach Anspruch 9, wobei
die weitere lichtstreuende Folie (44) ein lichtstreuendes Mittel enthält und so angeordnet ist, dass sie einer Lichtaustrittsfläche der lichtstreuenden Folie (43) zugewandt ist, und
ferner eine die Helligkeit verbessernde Folie (47) vorgesehen ist, die so angeordnet ist, dass sie einer Lichtaustrittsfläche der weiteren lichtstreuenden Folie (44) zugewandt ist.

13. Die Hintergrundbeleuchtungseinheit (40) nach Anspruch 9, wobei
die weitere lichtstreuende Folie (44) näher am Bildschirm (50a) angeordnet ist als die lichtstreuende Folie (43), wobei vorzugsweise
die lichtstreuende Folie (43) die lichtstreuende Folie nach Anspruch 6 ist, und
die lichtstreuende Folie so angeordnet ist, dass die zweite Oberfläche (43b) der Lichtquelle (42) zugewandt ist.

14. Eine Flüssigkristallanzeigevorrichtung (50), umfassend:
die Hintergrundbeleuchtungseinheit (40) nach Anspruch 7; und
ein Flüssigkristallanzeigefeld (5).

15. Eine Informationsvorrichtung, umfassend:
die Flüssigkristallanzeigevorrichtung (50) nach Anspruch 14.

## Revendications

1. Une feuille diffusant la lumière (43) comprenant une pluralité de parties déprimées (22) formées en une pyramide polygonale approximativement inversée ou en une pyramide polygonale tronquée approximativement inversée sur au moins une première surface (43a), dans laquelle un pas du réseau de la pluralité de parties déprimées (22) est de 300 µm ou plus et de 1500 µm ou moins,
une largeur d'une portion de limite entre des parties déprimées (22) adjacentes dans la pluralité de parties déprimées (22) est de 25 % du pas du réseau (P) ou moins, et
des lignes de crête (23) partitionnant la pluralité de parties déprimées (22) présentent une forme déprimée entre des points d'intersection (23a) des lignes de crête (23), par rapport à une ligne droite reliant les points d'intersection (23a).

2. La feuille diffusant la lumière (43) selon la revendication 1, dans laquelle le pas du réseau est de 1000 µm ou moins.

3. La feuille diffusant la lumière (43) selon la revendication 1, dans laquelle la largeur de la portion de limite est une largeur d'une portion courbe d'un sommet de lignes de crête (23) qui partitionnent la pluralité de parties déprimées (22).

4. La feuille diffusant la lumière (43) selon la revendication 3, dans laquelle
la pluralité de parties déprimées (22) est formée en une pyramide carrée approximativement inversée ou en une pyramide carrée tronquée approximativement inversée, les lignes de crête (23) s'étendent dans une première direction (X) et une seconde direction (Y),
le pas du réseau est une valeur moyenne (P) d'un premier pas du réseau (Px) de la pluralité de parties déprimées (22) dans la première direction (X) et d'un deuxième pas du réseau (Py) de la pluralité de parties déprimées (22) dans la seconde direction (Y), et
la largeur de la portion de limite est une valeur moyenne (Wr) d'une largeur (Wrx) occupée par une portion courbe d'un sommet des lignes de crête (23) dans la première direction (X) et d'une largeur (Wry) occupée par une portion courbe d'un sommet des lignes de crête (23) dans la seconde direction (Y).

5. La feuille diffusant la lumière (43) selon la revendication 1, dans laquelle un angle formé entre une surface de paroi de la pluralité de parties déprimées (22) et une surface de feuille de la feuille diffusant la lumière (43) est de 40 degrés ou plus et de 65 degrés ou moins.

6. La feuille diffusant la lumière (43) selon la revendication 1, dans laquelle
la pluralité de parties déprimées (22) est uniquement prévue sur la première surface (43a), et
une seconde surface (43b) de la feuille diffusant la lumière (43) est une surface plane ou une surface mate.

7. Une unité de rétroéclairage (40) qui est intégrée dans un dispositif d'affichage à cristaux liquides (50) et qui guide la lumière émise par une source lumineuse (42) vers un écran d'affichage (50a), l'unité de rétroéclairage (40) comprenant :
au moins une feuille diffusant la lumière (43) selon l'une quelconque des revendications 1 à 6 entre l'écran d'affichage (50a) et la source lumineuse (42).

8. L'unité de rétroéclairage (40) selon la revendication 7, comprenant :
une pluralité des feuilles diffusant la lumière (43),
dans laquelle
la première surface (43a) d'une feuille diffusant la lumière (43) qui est la plus éloignée de la source lumineuse (42) parmi la pluralité de feuilles diffusant la lumière (43) est une surface d'incidence de la lumière.

9. L'unité de rétroéclairage (40) selon la revendication 7, comprenant en outre :
au moins une autre feuille diffusant la lumière (44) qui ne comporte pas de parties déprimées (22) formées en une pyramide polygonale approximativement inversée ou en une pyramide polygonale tronquée approximativement inversée, entre l'écran d'affichage (50a) et la source lumineuse (42).

10. L'unité de rétroéclairage (40) selon la revendication 9, comprenant :
une pluralité des feuilles diffusant la lumière (43),
dans laquelle
l'autre feuille diffusant la lumière (44) est disposée entre l'écran d'affichage (50a) et la pluralité de feuilles diffusant la lumière (43), et
les deux surfaces de l'autre feuille diffusant la lumière (44) sont des surfaces mates dont la rugosité de surface Ra est de 0,1 µm ou plus et de 10 µm ou moins, dans laquelle de préférence
une différence de rugosité de surface Ra entre les deux surfaces de l'autre feuille diffusant la lumière (44) est de 0,5 µm ou plus, et
une surface avec une rugosité de surface Ra plus faible de l'autre feuille diffusant la lumière (44) est une surface d'incidence de la lumière.

11. L'unité de rétroéclairage (40) selon la revendication 10, dans laquelle l'autre feuille diffusant la lumière (44) contient 0,5 partie en masse ou plus et 1,5 partie en masse ou moins d'un agent de diffusion de lumière pour 100 parties en masse d'une résine de matrice.

12. L'unité de rétroéclairage (40) selon la revendication 9, dans laquelle
l'autre feuille diffusant la lumière (44) contient un agent de diffusion de lumière et est disposée de manière à faire face à une surface de sortie de lumière de la feuille diffusant la lumière (43), et
une feuille améliorant la luminosité (47) disposée de manière à faire face à une surface de sortie de lumière de l'autre feuille diffusant la lumière (44) est en outre prévue.

13. L'unité de rétroéclairage (40) selon la revendication 9, dans laquelle
l'autre feuille diffusant la lumière (44) est disposée plus près de l'écran d'affichage (50a) que la feuille diffusant la lumière (43), dans laquelle de préférence la feuille diffusant la lumière (43) est la feuille diffusant la lumière selon la revendication 6, et
la feuille diffusant la lumière est disposée de telle sorte que la seconde surface (43b) fasse face à la source lumineuse (42).

14. Un dispositif d'affichage à cristaux liquides (50), comprenant :
l'unité de rétroéclairage (40) selon la revendication 7 ; et
un panneau d'affichage à cristaux liquides (5).

15. Un appareil d'information, comprenant :
le dispositif d'affichage à cristaux liquides (50) selon la revendication 14.
